# EUROPEAN PATENT APPLICATION

(11) **EP 4 413 859 A1**
(43) Date of publication of application: **14.08.2024**
(21) Application number: 24157282.5
(22) Date of filing: 13.02.2024
(51) Int. Cl.: A01N 25/00, A01N 25/02, A01N 25/08, A01N 25/10, A01N 33/12, A01N 47/44, A01P 1/00, D06M 14/00

(54) **MIXTURES FOR RENDERING SUBSTRATES CATIONIC FOR ANTIMICROBIAL AND OTHER APPLICATIONS SUCH AS SUSTAINABLE DYEING WITH USE OF SALT OR SINGLE STEP DYEING OF BLENDED FABRICS**

(30) Priority: 13.02.2023 IN 202311009524
(71) Applicant: Livinguard Technologies AG, 6442 Gersau (CH)
(72) Inventor: SWAMY, Sanjeev, 6442 Gersau (CH); ZABARA, Mahsa, 8808 Pfäffikon (CH); SWAMY, Rohini, 400006 Mumbai (IN)
(74) Representative: Bardehle Pagenberg Partnerschaft mbB Patentanwälte Rechtsanwälte

(57) **Abstract**

The present invention relates to a mixture comprising: a cationic agent, a carrier substance which can be fixed to a substrate surface by a step of coating followed by a step of curing, and to which the cationic agent can be bound in the step of curing.

## Description

### 1. Field of the Invention

The present invention generally relates to mixtures for antimicrobial treatment of substrates for rendering said substrates antimicrobial, substantially without exposing humans to toxic and harmful compounds. Particularly, the present invention relates to a mixture comprising a cationic agent and a carrier substance, wherein the carrier substance can be fixed to a substrate surface. The present invention further relates to a mixture comprising a cationic agent and a pH responsive agent, wherein a charge of the pH responsive agent is dependent on the pH value of a medium to which it is exposed.

The present invention also relates to respective methods.

### 2. Background of the Invention

Nowadays, use of harmful chemicals is known to cause severe damage to the environment. One of the largest contributors to this damage are disinfectants and antimicrobials, and they are also the least sustainable. Given the recent trends in terms of both sustainability and environmental protection, there is a need for a change in current methods of antimicrobial protection.

Recognizing this need, the EU has adopted a clause in its biocides and pesticides regulation - that if it can be proven that killing microbes is performed based on physical means, then it is exempted from regulations. In this manner, "*physical means*" or "*physical mode of action*" means destroying microbes by way of flattening or otherwise deforming the cell membrane of the microbes, without toxic or harmful chemicals entering the microbe. It is known that a positively charged or cationic surface aids in killing microbes, as the membrane of most microbes is negatively charged. This is based on the attraction of the negatively charged microbe membranes and the subsequent destruction of the microbe when it comes in close proximity to the surface.

For example, it is known that some polycationic polymers have antimicrobial properties wherein the killing of microbes occurs by a respective surface charge density. The effect of polymer length on killing efficiency has been under discussion in the literature. Klibanov and co-workers hypothesized that the killing efficiency of immobilized polycationic chains would be enhanced if the chains were sufficiently long and flexible. In detailed studies, Russell et al. and Matyjaszewski et al. used both "grafting from" and "grafting onto" techniques to prepare surfaces with various polymer chain lengths and surface charge densities. Killing efficiency of these surfaces was proven to be independent of polymer chain length and chemical nature but to be dependent only on the surface charge density.

Taking the above in consideration, several needs have evolved and can be derived as set out in the following.

Firstly, the present market is facing an increasing demand of many different surfaces that should be rendered antimicrobial. In the prior art, several attempts have been made to address the above-mentioned needs.

Document US 2005/0095266 A1 relates to a surface treatment of a solid substrate by photopolymerization to obtain biocidal properties. Photopolymerization and covalent grafting is performed in situ on said substrate of a biocidal copolymer. Further, inter alia the solid substrate is put in contact with a formulation comprising a monomer with a biocidal group, a copolymerisable compound, a photo primer and a grafting agent on the substrate. Moreover, photopolymerization and covalent grafting is carried out by UV-radiation.

However, this surface treatment has several drawbacks. One drawback is that cumbersome impregnation of the substrate has to be performed by way of photo priming reagents and grafting agents for polymerization.

Document WO 2005/084436 A1 relates to methods and compositions for materials having a non-leaching or slow-release coating that has antimicrobial properties. The coating is applied to substrates such as silicates, iron oxides, titanium dioxide, pigments, powders, and other substrates. Covalent bonds or ionic bonds are formed between the substrate and the polymer molecules that form the coating. This document also describes that, next to cellulose, any material such as ceramic with hydroxyl groups available can be used as substrate.

However, this document already explains that methods are required for introducing surface hydroxyl groups in order to make them prone to react with antimicrobials to form bonds. For instance, the document suggests that plasma or UV treatment to subject surfaces to hydrolysis reaction to introduce surface hydroxyl groups. This is disadvantageous for the manufacturing process. A further drawback of the solution proposed by this document is that expensive initiators have to be applied for the graft polymerization. This is cumbersome and makes the overall process cost intensive.

In view of the above, there is a need for improved measures to apply a mixture to the surfaces, in particular to apply them in a cost-effective way.

Secondly, many of the treated substrates are washable and reusable. Given that most detergents and cleaning agents are anionic in nature, the positive charge on the material which was earlier treated with a disinfectant gets neutralized within the first or second wash. Thus, the treated substrates should be "wash or use durable". Similar as regards the afore mentioned need, cleaning fluids that are used on treated substrates such as on floors or tabletops are anionic. Furthermore, microbes destroyed by the cationic properties of the surface also may get attached to the surface by the electrical attraction, and therefore they may contribute to a neutralization of the surface.

Thus, it is desirable to prevent neutralizing of the cationic charge of the antimicrobial agent imparted to said substrates.

Finally, while the electrical charge of the surface has the beneficial effect of rendering the surface antimicrobial, it may also have the effect of making the surface more prone to staining. This is because dirt and other material, negatively charged substances, likewise get attracted by the positive charge of the surface. The problem is more pronounced for surfaces with high density charges, i.e. in particular for surfaces with a high antimicrobial efficiency.

Therefore, it is desirable to provide cationic surfaces which can be cleaned more easily.

In other aspects, while manufacturers are aware of the need for adding antimicrobial protection to their products, the demand for environmental protection becomes increasingly important. Thus, non-toxic and non-harmful agents should be used for imparting antimicrobial properties to substrates. These agents should be able to destroy microbes based on physical impacts, i.e. they should not be dangerous for users or individuals or any kind of living entity. In terms of antimicrobial performance, it is desirable to provide antimicrobial substrates that are self-disinfecting, such that they destroy substantially all of the microbes.

Against this background, it is an object of the present invention to overcome the above-mentioned drawbacks at least in part and to address the above-mentioned needs.

### 3. Summary of the Invention

The above-mentioned objects and needs are at least partially achieved by the subject-matter of the independent claims. Preferred embodiments are subject of the dependent claims, and the skilled person finds hints for other suitable aspects of the present invention through the overall disclosure of the present application.

### Carrier

A **1^{st} embodiment** of the invention is directed to a mixture comprising:
- a cationic agent;
- a carrier substance which can be fixed to a substrate surface by a step of coating followed by a step of curing, and to which the cationic agent can be bound in the step of curing.

By way of the carrier, the cationic agent can surprisingly be substantially permanently fixed to the substrate surface. As the cationic agent provides for a positive charge, such fixing renders the substrate surface antimicrobial. Using a carrier is much more cost-effective and cheaper compared to approaches in the prior art. Particularly, the inventors found that the substrate surface does not need to be pre-treated in order to facilitate fixing and adhering of an antimicrobial agent.

The carrier substance may be, e.g., one from the group comprising polyurethane, epoxy resin, and acrylics. Further, the carrier substance may be selected from the group comprising varnishers, lacquers, inks, and paints.

In many applications a coating, in particular with the above-mentioned exemplary carrier substances, is routinely part of the manufacturing process. Thus, adding the cationic agents to the coating does not increase the manufacturing costs significantly. Particularly, in coatings of substrates, carriers may routinely be applied in order to impart other functionalities such as such anti-fog, anti-scratch, hydrophobic, stain-resistance, or flame-retardants functionalities. Thus, carriers in general may be a mature technique for surface treatments. Adding cationic agents to the carrier substance has proven the advantage that a substrate can be rendered antimicrobial in substantially the steps of coating and curing. Thus, a new functionality, i.e. an antimicrobial functionality, can be easily provided.

The carrier substance can be fixed to the substrate surface by the "*coating*", which may be any step suitable of applying the carrier to a surface of the substrate. For instance, the carrier may be applied by dipping, rolling or spraying.

The step of "*curing*" may be any step suitable to initiate a reaction or the like. For instance, curing may comprise that a material is hardened by cross-linking of monomer/polymer chains. Curing may be initiated by any one of or a combination of heat, (UV) radiation, electron beams, and chemical additives.

The "*cationic agent*" may be any agent suitable to render a substrate antimicrobial by imparting positive charges to the surface. Cationic means that the number of positive charged groups comprised by the agent is higher than the number of negatively charged groups. Thus, for instance, in an electrolyzed solution said cationic agent may migrate to the cathode. The cationic agent may also comprise an agent with a plurality of positively charged groups (polycationic agent).

According to a **2^{nd} embodiment,** in the mixture of the preceding embodiment, the cationic agent is a cationic monomer or polymer.

The inventors found that monomers have the advantage that steric hindrances of compounds that have greater chain lengths (e.g. polymers) can be overcome. In particular, steric hindrance of polymerized molecules, which typically have large atomic chains, may compromise binding of more molecules per substrate surface area as compared to monomers. Monomers are sometimes advantageous compared to polymers in that due to the original nature of the polymer, it may not be feasible to fix them onto the substrate surface in order to impart a sufficiently large accumulation of the positive charge. Sometimes salt or impurities may adversely affect the protonation levels of these polymers.

However, cationic polymers may also be useful in some instances. For example, if it is necessary to add the agent in the form of a powder, this may be more easy for polymers than monomers.

Some cationic polymers may be considered as toxic, such that they do not pass the exemption criteria for destroying microbes based on physical mode of action as imposed *inter alia* by EU regulations. A typical example may be quaternary ammonium compounds which kill physically but are considered biocides in their inert form.

According to a **3^{rd} embodiment,** in the mixture of the 2nd embodiment, the cationic monomer is selected from the group comprising 2-trimethylammonium ethyl methacrylate chloride (METAC), acryloxyethyltrimethyl ammonium chloride, dimethylaminoethyl acrylate, methacryloxyethyltrimethyl ammonium chloride, and diallyldimethylammonium chloride.

This has the advantage that the cationic agent is non-toxic or at least has a negligible level of toxicity.

The following formula exemplarily shows METAC.

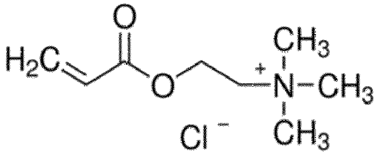

METAC is a quaternary ammonium chloride, composed of a positively charged quaternary amine (as can be seen in the right-hand side of the above formula) and a short alkyl chain with methyl methacrylate (as can be seen in the left-hand side in above formula).

According to a **4^{th} embodiment,** in the mixture of any one of the preceding embodiments, the cationic agent as such, when not fixed to the substrate, is not antimicrobial, or has a negligeable antimicrobial activity.

This has the great practical advantage that certain regulations which apply to known biocides do not apply to these agents.

METAC monomer as such an agent which merely has a negligible antimicrobial activity. However, when this monomer is fixed to the substrate surface, it was found that a surprisingly high antimicrobial efficiency can be reached. Without wishing to be bound by theory, it is believed that this is caused by the monomers being bound to the substrate surface in high accumulation and at high density. In one example, the monomers may be bound so as to be uniformly oriented with the positively charged group (e.g. the quaternary amine group) being exposed from the substrate surface. Thus, microbes in close proximity may be destroyed effectively by way of physical impact due to the charging.

According to a **5^{th} embodiment,** in the mixture of any one of the preceding embodiments, the mixture when fixed to the substrate surface can impart to said substrate a net positive charge of at least 10mV ζ-potential, preferably at least 20mV ζ-potential, more preferably at least 30mV ζ-potential, even more preferably at least 40mV ζ-potential, particularly at least 50mV ζ-potential, and most preferably at least 60mV ζ-potential.

This has the advantage that an extraordinary high surface charge can be imparted to the substrate surface. As described herein, such high surface charge may be reached by using cationic monomers as agents. Such monomers provide for the benefit that per binding to the substrate surface a relatively high charging can be achieved. The electrical potential achieved on the surface supports killing virus, bacteria and/or other microbes effectively. If monomers were to polymerize before fixing to the substrate surface, some cationic charges may get lost during this polymerization.

The ζ-potential (zeta-potential) is an electrical potential at the slipping plane, i.e. the interface separating mobile fluid from fluid that remains attached to the surface of the molecules. A high net positive charge according to the ζ-potential of a substance has the advantage that it provides for high antimicrobial activity. In an exemplary manner, the ζ-potential can be measured using a SURPASS device, for instance a device of the manufacturer Anton Paar. As understood by the skilled person, other suitable measurement devices could likewise be used in the present invention.

According to a **6^{th} embodiment,** in the mixture of any one of the preceding embodiments, the substrate is a textile such as a woven or non-woven textile, glass, metal, stone, ceramics, wood, paper, and/or a polymeric substrate such as plastic PVC, TPU, rubber, or nitrile latex.

According to a **7^{th} embodiment,** in the mixture of any one of the preceding embodiments, the carrier substance is selected from the group comprising polyurethane, epoxy resin, and acrylics.

Such carrier substances are abundantly available, and, hence, easily accessible, which is beneficial in terms of procurement. Further, these carrier substances are relatively cheap.

According to an **8^{th} embodiment,** in the mixture of the preceding embodiment the polyurethane is water-based or solvent-based.

This has the advantage that the polyurethane can be applied in a flexible manner.

According to a **9^{th} embodiment,** in the mixture of any one of the preceding embodiments, the carrier substance is selected from the group comprising varnishers, lacquers, inks, and paints.

Such carriers are examples of coatings which are routinely applied to certain substrates in the manufacturing process.

According to a **10^{th} embodiment,** in the mixture of any one of the preceding embodiments, the mixture comprises a UV-photoinitiator and the curing is UV-curing.

The use of photoinitiators is a mature technology for curing and thus accepted in the industry. For instance, photoinitiators may anyhow and routinely be used when other functionalities are to be imparted to substrates with the aid of UV radiation. Thus, this embodiment has the advantage that rendering a substrate antimicrobial can be easily combined with such other functionalities without substantially modifying the process steps.

It is noticed that UV-light is economic and easy to procure. Photoinitiators are chemical compounds that can decompose in a photolysis reaction after absorption of light of a certain wavelength or a wavelength range, e.g. UV-light. Thereby, photoinitiators form reactive species which can initiate a reaction which is triggered, e.g. by energy supply. The reactive species are typically of the types of radicals or cations.

According to an **11^{th} embodiment,** in the mixture of any one the preceding embodiment, the UV-photoinitiator is a solvent-based photoinitiator or a water-soluble photoinitiators.

Solvent-based photoinitiators with low water solubility are advantageous in case a nonaqueous solution is provided. A plurality of photoinitiators are available having a low water solubility. However, in some instances, also water-soluable photoinitiators are beneficial.

According to a **12^{th} embodiment,** in the mixture of any one of the **10th or 11th embodiments,** the UV-photoinitiator is seleted from the group comprising Lithium phenyl-2,4,6-trimethylbenzoylphosphinate, 2,2'-Azobis (2-methylpropionamidine) dihydrochloride, 2-Hydroxy-4'-(2-hydroxyethoxy)-2-methylpropiophenone, 4,4'-Azobis(4-cyanovaleric acid), 2-Benzyl-2-(dimethylamino)-4'-morpholino butyrophenone, 4,4'-Bis(diethylamino)benzophenone, phenylic(2,4,6-trimethylbenzoyl)phosphine oxide (TPO), Benzophenone Cerium (IV) ammonium nitrate.

According to a **13^{th} embodiment,** in the mixture of any one of the preceding embodiments, the mixture is a paste, suspension, emulsion, solution and/or liquid.

This has the advantage that the mixture can be easily handled and processed, e.g. coated on a substrate surface.

According to a **14^{th} embodiment,** in the mixture of any one of the preceding embodiments, the mixture is comprising one or more further functional agents, in particular anti-fog, anti-scratch, hydrophobic, hydrophilic, stain-resistance, flame-retardants, or oil-repellants.

A **15^{th} embodiment** of the invention is directed to a method of fixing the mixture of any one of the preceding embodiments to a substrate surface, comprising the steps of
- coating the substrate surface with the mixture;
- curing of the coating.

It is noted that the method steps as described herein may include all aspects, embodiments, features and/or advantages described herein, even if not expressly described as method steps but rather with reference to a mixture. It is also to be understood that the features and advantages described with reference to a mixture may equally be applicable to the method steps. Moreover, the mixture as outlined herein may include all features of aspects and/or embodiments as outlined herein, even if these may rather be described in the context of method steps. Furthermore, the features and advantages described with reference to the method steps may equally be applicable to the mixture and *vice versa.*

According to a **16^{th} embodiment,** in the method of the preceding embodiment, curing is UV-curing.

According to a **17^{th} embodiment,** in the method of any one of the preceding embodiments 15 or 16, the cationic agent is bound to the carrier substance in the step of curing.

According to an **18^{th} embodiment,** in the method of the preceding embodiment, the cationic agent is bound to the carrier substance by crosslinking or polymerization.

As regards the advantages and features of these method steps, the advantages and features as described with reference to the mixture apply, respectively.

A **19^{th} embodiment** of the invention is directed to a substrate having a surface to which a mixture of any one of the 1^{st} to 14^{th} embodiments has been applied, preferably by the method of any one of the 15^{th} to 18^{th} embodiments.

It is noted that the substrate as described herein may include all aspects, embodiments, features and/or advantages described herein, even if not expressly described with reference to the substrate but rather with reference to a mixture and/or to a method. Thus, in particular as regards the advantages and features of the substrate, the advantages and features as described with reference to the mixture and/or the method apply.

According to a **20^{th} embodiment,** in the substrate of the preceding embodiment, the surface has a net positive charge of at least 10mV ζ-potential, preferably at least 20mV ζ-potential, more preferably at least 30mV ζ-potential, even more preferably at least 40mV ζ-potential, particularly at least 50mV ζ-potential, and most preferably at least 60mV ζ-potential, as a consequence of the fixing of the mixture.

According to a **21^{st} embodiment,** in the substrate of any one of the embodiments 19 or 20, the substrate is a textile, in particular a woven or non-woven textile, glass, metal, stone, ceramics, wood, paper, and/or a polymeric substrate such as plastic PVC, TPU, rubber, or nitrile latex.

According to a **22^{nd} embodiment,** in the substrate of any one of the embodiments 19 to 21, the substrate is part of a medical device, a flooring, home furnishing, wall, food packaging, sanitary facility, in particular toilet or toilet seat.

### pH responsive agent

A **23^{rd} embodiment** of the invention is directed to a mixture comprising:
- a cationic agent;
- a pH responsive agent whose charge is dependent on the pH value of a medium to which it is exposed in that it is positively charged if the pH value is below a first threshold value, and negatively charged if the pH value exceeds a second threshold value.

With this embodiment, anionic repellent properties of surfaces treated by this mixture can be achieved depending on a pH value in an unprecedented manner. In particular, this mixture has the advantage of being capable of imparting antimicrobial properties to a substrate, wherein such antimicrobial properties are extraordinary wash durable.

The inventors found a way to protect the positive charge (i.e. the antimicrobial properties) of a treated substrate surface by changing said charge depending on an environmental influence, i.e. the pH value. Thus, a positive charge, which aids in destroying microbes by physical impact can be provided at pH conditions where the need arises (e.g. below a first threshold). Further, the positive charge may be changed to a negative charge (e.g. above the second threshold) in order to provide repelling properties against ions with the same charging, i.e. anions. This paves the way to use substrate surfaces treated by the mixture in substantially any environment without compromising antimicrobial efficiency, when the need arises. Thus, the flexibility and functionality can be increased.

This is because such anionic conditions often prevail during washing of substrates and/or cleaning floors or the like. In such situations, the substrates are exposed to anionic detergents or ethanol, for example. Furthermore, the detergents, washing or cleaning agents are typically alkalic. The pH responsive agents, which become negatively charged when exposed to an alkalic medium, therefore provide for a countermeasure to prevent blocking of the positive charges on the substrate even when exposed to such (alkalic or basic) milieus comprising anions.

Further applications for which the 23^{rd} embodiment has proven to be of significant importance are any kind of medical devices that are cleaned and/or when they are inside a human body, e.g. during surgery. Different pH milieus are present in the human body (e.g. the blood and the cytoplasm of the cells).

Moreover, attributable to the change of a positive charge to a negative charge above the second threshold, residues of microbes that are destroyed by the surface may also be released more easily. Without wishing to be bound by theory, this may be the case since microbes have negatively charged surfaces. Thus, the destroyed microbes are repelled from a substrate surface treated by the mixture according to the 23^{rd} embodiment, when exposed to a pH milieu that exceeds the second threshold. Accordingly, the treated surface can be cleaned more easily, for instance during laundry, washing, cleaning or the like.

Another advantage is that stains can be removed more easily. Stains are oftentimes anionic and, hence, negatively charged and possibly difficult to remove from negatively charged surfaces. Thus, also stains are repelled from a substrate surface treated by the mixture according to the 23^{rd} embodiment, when exposed to a pH milieu that exceeds the second threshold.

These advances cannot be achieved from the solutions provided from the prior art. In particular, the prior art mixtures and/or treated substrates are adversely affected by blockage of the positive surface charge during alkalic/basic milieus. This compromises adherence and, thus, antimicrobial efficiency of treated substrates.

According to a **24^{th} embodiment,** in the mixture of the preceding embodiment, the cationic agent is a cationic polymer, monomer, amino acid, or a peptide.

According to a **25^{th} embodiment,** in the mixture of the preceding embodiment, the cationic polymer is selected from the group comprising polyvinylamine (PVAm), poly(N-dimethylaminoethylmethacrylate) (PDAm), polyacrylicacid (PAA), chitosan, and Polyethyleneimine (PEI).

According to a **26^{th} embodiment,** in the mixture of the 24^{th} embodiment, the cationic monomer is selected from the group comprising 2-trimethylammonium ethyl methacrylate chloride (METAC), acryloxyethyltrimethyl ammonium chloride, dimethylaminoethyl acrylate, methacryloxyethyltrimethyl ammonium chloride, and diallyldimethylammonium chloride.

According to a **27^{th} embodiment,** in the mixture of the 24^{th} embodiment, the cationic amino acid is arginine.

According to a **28^{th} embodiment,** in the mixture of the 24^{th} embodiment, the peptide is nisin or guanidine hydrochloride.

According to a **29^{th} embodiment,** in the mixture of any one of the embodiments 23 to 28, the cationic component as such, when not fixed to the substrate, is not antimicrobial.

According to a **30^{th} embodiment,** in the mixture of any one of the embodiments 23 to 28, wherein the cationic component as such, when not fixed to the substrate, is antimicrobial.

According to a **31^{st} embodiment,** in the mixture of the preceding embodiment, wherein the cationic component is PHMB, organosilane, propiconazole.

According to a **32^{nd} embodiment,** in the mixture of any one of the embodiments 23 to 31, the mixture when affixed to a substrate surface can impart to said substrate a net positive charge of at least 10mV ζ-potential, preferably at least 20mV ζ-potential, more preferably at least 30mV ζ-potential, and most preferably at least 40mV ζ-potential.

According to a **33^{rd} embodiment,** in the mixture of the preceding embodiment, the substrate is a textile, in particular a woven or non-woven textile, glass, metal, stone, ceramics, wood, paper, and/or a polymeric substrate such as plastic PVC, TPU, rubber, or nitrile latex.

According to a **34^{th} embodiment,** in the mixture of any one of the embodiments 23 to 33, the pH responsive agent is selected from the group comprising an amphoteric substance, a zwitterionic substance, vinyl phosphonic acid, poly (vinyl phosphonic acid), poly (vinyl phosphonic acid) copolymers, and poly (vinyl phosphonic acid) derivatives.

According to a **35^{th} embodiment,** in the mixture of the preceding embodiment, the amphoteric substance is selected from the group comprising amine oxide, imidazoline, and silicone-based polyurethane.

According to a **36^{th} embodiment,** in the mixture of the 34^{th} embodiment, the zwitterionic substance is an amino acid.

According to a **37^{th} embodiment,** in the mixture of any one of the embodiments 23 to 36, the pH responsive agent is a softener.

According to a **38^{th} embodiment,** in the mixture of any one of the embodiments 23 to 37, the cationic agent and the pH responsive agent are both a polymer.

The inventors found that the length of the cationic agent and the pH responsive agent should correspond to one another, so that the distance between the negatively charged pH responsive agent (under alkalic conditions) and the positively charged agents is minimized to have an improved repelling effect. Thus, if a polymer is used as cationic agent, it is advantageous to also use a polymer as pH responsive agent.

According to a **39^{th} embodiment,** in the mixture of any one of the embodiments 23 to 38, the cationic agent and the pH responsive agent are both a monomer.

According to a **40^{th} embodiment,** in the mixture of any one of the embodiments 23 to 39, the mixture is a powder, paste, emulsion, suspension, solution and/or liquid.

This has the advantage that the mixture can be easily handled and processed, e.g. coated on a substrate surface.

According to a **41^{st} embodiment,** in the mixture of any one of the embodiments 23 to 40, the pH value of the first threshold, below which the pH responsive agent is positively charged, is at least 5.0, preferably at least 5.4, more preferably at least 5.8, more preferably at least 6.2, more preferably at least 6.6, more preferably at least 6.8, more preferably at least 7.0, more preferably at least 7.2, more preferably at least 7.4, most preferably at least 7.5, and/or at most 9.0, preferably at most 8.5, more preferably at most 8.0, more preferably at most 7.8, more preferably at most 7.6, more preferably at most 7.5;
the pH value of the second threshold, above which the pH responsive agent is negatively charged, is at least 5.0, preferably at least 5.4, more preferably at least 5.8, more preferably at least 6.2, more preferably at least 6.6, more preferably at least 6.8, more preferably at least 7.0, more preferably at least 7.2, more preferably at least 7.4, most preferably at least 7.5, and/or at most 9.0, preferably at most 8.5, more preferably at most 8.0, more preferably at most 7.8, more preferably at most 7.6, more preferably at most 7.5; and/or
the first threshold value equals the second threshold value.

This has the advantage that the charge of the pH responsive agent can be changed from negative to positive (pH value is below the first threshold) and from positive to negative (pH value exceeds, i.e. is above, the second threshold) according to the specific pH threshold values.

The inventors found that an optimum balance of the first and second threshold value should be struck. Too low values should be avoided, as this may cause pain if a consumer gets in contact with a substrate treated with such a mixture. Further, too high values should also be avoided as this may adversely affect proper repelling of anionic charges, and thus, may compromise adherence of the positive charging at a treated substrate surface after contacting anionic charges.

According to **embodiment 41a,** in the mixture of any one of the embodiments 23 to 40, in particular where the cationic polymer is Polyethyleneimine (PEI), the pH value of the first threshold, below which the pH responsive agent is positively charged, is at least 2.0, preferably at least 3.0, more preferably at least 3.5, more preferably at least 3.8, more preferably at least 3.9, more preferably at least 4.0, and/or at most 8.0, preferably at most 7.0, more preferably at most 6.0, more preferably at most 5.5, more preferably at most 5.0, more preferably at most 4.5, more preferably at most 4.2, more preferably at most 4.1, more preferably at most 4.0;
the pH value of the second threshold, above which the pH responsive agent is negatively charged, is at least 2.0, preferably at least 3.0, more preferably at least 3.5, more preferably at least 3.8, more preferably at least 3.9, more preferably at least 4.0, and/or at most 8.0, preferably at most 7.0, more preferably at most 6.0, more preferably at most 5.5, more preferably at most 5.0, more preferably at most 4.5, more preferably at most 4.2, more preferably at most 4.1, more preferably at most 4.0; and/or
the first threshold value equals the second threshold value.

Similar advantages of the 41^{st} embodiment apply to embodiment 41a.

According to a **42^{nd} embodiment,** in the mixture of any one of the embodiments 23 to 41, the mixture is a mixture according to any one of embodiments 1 to 14.

Thus, it is understood that the mixtures as described herein may include all aspects, embodiments, features and/or advantages of one another, even if not expressly mentioned. Thus, in particular, the features and advantages described with reference to the mixture of any one of embodiments 1 to 14 may equally be applicable to the mixture of any one of the embodiments 23 to 41 and *vice versa.*

A **43^{rd} embodiment** of the invention is directed to a substrate to which the mixture of any one of embodiments 23 to 42 has been applied.

It is noted that the substrate as described herein may include all aspects, embodiments, features and/or advantages described herein, even if not expressly described with reference to the substrate but rather with reference to a mixture. Thus, in particular as regards the advantages and features of the substrate, the advantages and features as described with reference to the mixture apply.

According to a **44^{th} embodiment,** in the substrate of the preceding embodiment, the substrate is having a surface with a net positive charge of at least 10mV ζ-potential, preferably at least 20mV ζ-potential, more preferably at least 30mV ζ-potential, and most preferably at least 40mV ζ-potential as a consequence of the application of the mixture.

This has the advantage that an extraordinary high surface charge can be imparted to the substrate surface. As described herein, such high surface charge may be reached by using cationic monomers or polymers as agents. Such monomers or polymers provide for the benefit that per binding to the substrate surface a relatively high charging can be achieved. The electrical potential achieved on the surface supports killing bacteria and/or other microbes effectively.

The ζ-potential (zeta-potential) is as described elsewhere herein.

According to a **45^{th} embodiment,** in the substrate of any one of the embodiments 43 or 44, the substrate is a textile, in particular a woven or non-woven textile, glass, metal, stone, ceramics, wood, paper, and/or a polymeric substrate such as plastic PVC, TPU, rubber, or nitrile latex.

According to a **46^{th} embodiment,** in the substrate of any one of the embodiments 43 to 45, the substrate is part of a medical device, a flooring, home furnishing, wall, food packaging, sanitary facility, in particular toilet or toilet seat.

According to a **47^{th} embodiment,** in the substrate of any one of the embodiments 43 to 46, the pH responsive agent is capable of repelling negatively charged substances when exposed to a medium whose pH value exceeds the second threshold value.

According to a **48^{th} embodiment,** in the substrate of any one of the embodiments 43 to 47, the substrate is a substrate of any one of embodiments 19 to 22.

A **49^{th} embodiment** of the invention is directed to a process of regenerating the charge of and/or cleaning a surface of a substrate according to any one of embodiments 43 to 48, comprising the step of subjecting the surface to an alkaline medium.

It is noted that the process as described herein may include all aspects, embodiments, features and/or advantages described herein, even if not expressly described with reference to the process but rather with reference to a mixture and/or to a substrate. Thus, in particular as regards the advantages and features of the process, the advantages and features as described with reference to the mixture and/or the substrate apply.

As understood by the skilled person, a medium may be considered alkaline if the pH value of said medium is greater than about 7.

According to a **50^{th} embodiment,** in the process of the preceding embodiment, the medium has a pH of at least 8.0, preferably at least 8.5, more preferably at least 9.0.

According to a **51^{st} embodiment,** in the process of any one of the embodiments 49 or 50, the alkaline medium comprises a detergent, alcohol, and/or soap.

According to a **52^{nd} embodiment,** in the process of any one of the embodiments 49 to 51, the medium comprises anions, in particular anions comprising an OH⁻-group.

According to a **53^{rd} embodiment,** in the process of any one of the embodiments 49 to 52, the process is a process of washing, laundering, or otherwise cleaning the surface of the substrate and/or the substrate.

### 4. Brief Description of the Drawings

The following drawings form part of the present specification and are included to further illustrate aspects of the present invention. The invention may be better understood by reference to the drawings in combination with the detailed description of the specific embodiments presented herein.

It is to be noted, however, that the appended drawings illustrate only typical embodiments of the present subject matter, and are therefore, not to be considered for limiting its scope, for the subject matter may admit to other equally effective embodiments.

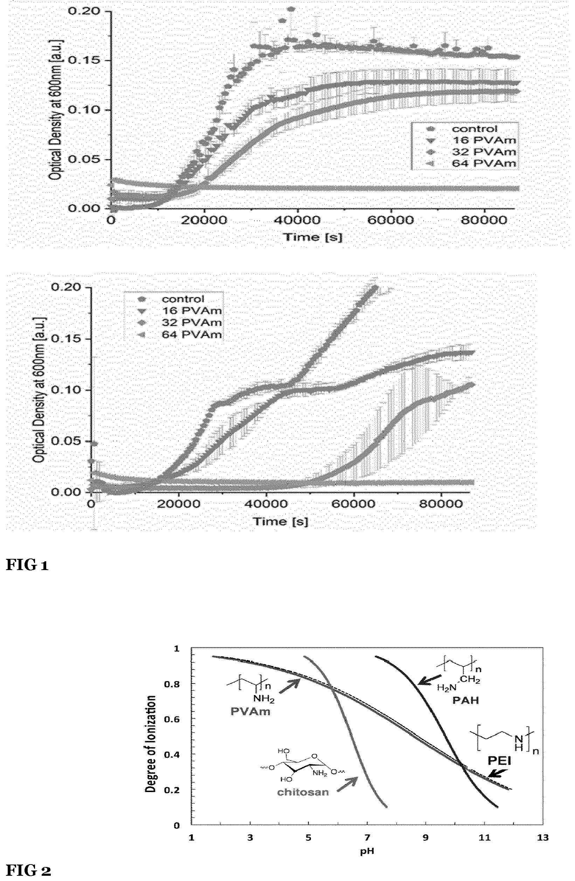

- **Figure 1**: illustrates minimal inhibitory concentration (MIC) of PVAm in solution for *E.Coli* and *S.Aureus.*
- **Figure 2**: illustrates comparison of the ionization behaviors of such polymers with linear PEI and PAH based on Henderson Hasselbalch fits to experimental titration curves in 1 M KCl. The chitosan (500 kDa, DS 0.80) fit was for a titration conducted in 0.1 M NaCl.
- **Figure 3**: illustrates pH dependent zeta potential of the polyester treated.
- **Figure 4**: illustrates schematic of a kiss roll machine.

These and other features of the invention will become apparent from a consideration of the detailed description.

### 5. Detailed Description of preferred embodiments of the Invention

### Definitions

The articles "a", "an" and "the" are used to refer to one or more than one (i.e. to at least one) of the grammatical object of the article.

The terms "comprise" and "comprising" are used in the inclusive, open sense, meaning that additional elements may be included. It is not intended to be construed as "consists of only".

Throughout this specification unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "included but not limited to". "Including" and "including but not limited to" are used interchangeably.

Following terms have the meaning as mentioned below:
- GPL: Grams Per Liter
- OBA: Optical Brightening Agent
- GSM: Grams per Sq Meter
- IPA: Isopropyl Alcohol
- C: Celsius
- AATCC: American Association of textile chemists and colorists
- AATCC 100: Standard method for determining antimicrobial performance on treated textiles.
- MS 2: E.Coli based Bacteriophage used as a surrogate for antiviral performance
- mV: Millivolts
- PAS 21 CL: Poly Di Allylamine
- *E.Coli*: Bacteria *Escherichia coli*
- *S.Aureus*: Bacteria *Staphylococcus aureus*

### Description of the figures

The following description is provided to assist in a comprehensive understanding of exemplary embodiment of the invention. It includes various specific details to assist the understanding, but these are to be regarded as merely exemplary.

Accordingly, those of ordinary skill in the art will recognize that various changes and modifications of the embodiments described herein can be made without departing from the scope of the invention. In addition, description of well-known functions / constructions is omitted for clarity and consciousness.

Those skilled in the art will be aware that the invention described herein is subject to variations and modifications, other than those specifically described. It is to be understood that the invention described herein includes all such variations and modifications. The invention also includes all such steps, features, compositions, and compounds referred to or indicated in this specification, individually or collectively, and any and all combinations of any two or more of said steps or features.

The present invention is not to be limited in scope by the specific embodiments described herein, which is intended for the purposes of exemplification only. Functionally equivalent products, compositions, and methods are clearly within the scope of the invention, as described herein.

For convenience, before further description of the present invention, certain terms employed in this specification, examples and appended claims are collected here. These definitions should be read considering the remainder of the disclosure and understood as by a person of skill in the art. Unless defined otherwise, all technical and scientific terms used herein have the same meaning as commonly understood by a person of ordinary skill in the art.

Features that are described and/or illustrated with respect to one embodiment may be used in the same way or in a similar way or more other embodiments and/or in combination with or instead of the features of other embodiments.

In an aspect, the present invention provides a disinfectant which comprises:
- polycationic polymers and monomers, amino acids and peptides that are preferably inherently not antimicrobial in nature and processing such materials by, optionally deprotonating, neutralizing followed by (Re) protonating so that when these processed materials are bound to surfaces, they have a positive charge which causes microbes to rupture and become unviable;
- compatible monomers, polymers, softeners and other functionalizing agents that are necessary for specific applications, such as zwitterionic compounds to the treated materials of above step.

In another aspect, the present invention provides a method of preparing the non-biocidal disinfectant comprising the steps of:
∘ taking polycationic polymers and monomers, amino acids and peptides that are inherently not antimicrobial in nature and processing such materials by, optionally deprotonating, neutralizing followed by (Re) protonating so that when these processed materials are bound to surfaces, they have a positive charge which causes microbes to rupture and become unviable;
∘ adding compatible monomers, polymers, softeners and other functionalizing agents that are necessary for specific applications, such as zwitterionic compounds to the treated materials of above step;
∘ making the liquor, paste, powder or substance of the material obtained in either of the above steps.

In an embodiment, the method of deprotonating, neutralizing, adding of salts, acids, and other adjuncts is done in a measure that ensures that the correct protonation takes place in order to effectively bind such a treated material, with or without an adjuvant, to a substrate.

In another embodiment, the adjuvant added to the treated material includes, if needed, naturally occurring fungicides.

In another aspect, the present invention provides an antimicrobial formulation which may be in the form of a liquor, paste, powder, or suspension for treating of the substrates or surfaces.

In another embodiment adjuvants are added to the treated material to formulate the non-biocidal disinfectant of the present invention in the form of liquor, paste, or powder.

It is known in the literature that polymers such as PVAm (polyvinylamine), PDAm (poly(N-dimethylaminoethylmethacrylate), PAA (polyacrylic acid), Metac ([2-(methacryloyloxy) ethyl] trimethylammonium chloride) polymers, monomers, and naturally occurring polymers and peptides such as Arginine & Nisin have antimicrobial properties due to the positive charge when they are fixed permanently on the surface. However, due to the original nature of the polymer, it's not feasible to fix them directly on the surface and have an accumulation of the positive charge without salt or impurities interfering with the protonation levels of these polymers.

In an embodiment, the disinfectant of the present invention is formulated in the form of a formulation such as liquor, powder, paste or suspension for the specific end-user needs to treat different surfaces and create antimicrobial surfaces. The basic need for creating a perfect liquor, powder, or paste of suspension, using polycationic polymers is dependent on the particular polymer used in the non-biocidal disinfectant formulation and the surface to be treated.

In an embodiment, the liquor, powder, paste or suspension for specific end-use is designed and optimized to give maximum positive charge density to each specific surface which is to be treated. So specific combinations of salt, cross-linker, and softener are added to guarantee permanent binding of the molecules to the surface which is to be treated and to adjust the specific pH and ionic strength values of the formulation of the non-biocidal disinfectant of the present invention to guarantee the maximum protonation. The optimized substrate or surface which is treated with the formulation of the present invention should be able to generate a ζ-potential >/= +10mV compared to its control after rinsing or washing if needed.

The treated polycationic polymer and in some cases, the substrate to be treated like natural fibers can be affected by changing the pH and salt concentration of the liquor of the non-biocidal disinfectant of the present invention. Changing the pH of the liquor of the non-biocidal disinfectant of the present invention affects the polycationic polymer comprising such liquor, and, in some cases, it also affects the substrate i.e. natural fiber which is treated with such liquor. Choosing a condition that gives us the best absorption kinetics (salt concentration and pH) is preferable. For example, in the case of polyvinyl amine in a salt solution with an ionic strength of I =2.10 - 3 M, the optimum pH was reported 10.6-11. The surface charge of cotton is usually constant between 7-11, and PVAm charge will increase with decreasing the pH.

This phenomenon increases the charge repulsion between the polymer segments and will change the 3D configuration, consequently affecting adsorption kinetics. The electrostatic interactions play a crucial role in polyelectrolyte adsorption as the interactions between the polymer segment and the surface and between the polymer segments themselves come into play. So, optimizing the liquor condition such as pH and ionic strength here plays a role in bringing the polymer to the surface of the treating material like cotton and polyester in Exhaust and padding process. Additions of other materials cause the swelling of fibers to have better penetration etc. It has shown that surfaces and substrates show antimicrobial properties only after creating this ζ-potential >/= +10mV.

In a second aspect, the present invention provides a method of preparation of antimicrobial formulations which impart the following properties to the surface of various materials by using positively charged polymers and monomers such as polycationic compounds/substances as the main antimicrobial/positive charge creating a component:
- antimicrobial,
- permanently self-disinfecting, and
- optionally reusable.

The positively charged polymers and monomers such as polycationic compounds/substances as the main antimicrobial/positive charge creating component in the non-biocidal free antimicrobial formulations of present invention is selected from a list of polycationic polymers such as polyvinylamine (PVAM), PDAmm, polyamidoamine (PAA) in original and modified form, as one polymer or as copolymers or as a mixture of two or more polymers, polycationic monomers such as Metac monomer containing positively charged groups, Zwitterionic polymers, and naturally occurring polymers and peptides such as Arginine & Nisin, LL-37, chitosan, dextran, modified chitosan, modified dextran.

The method of creating antimicrobial formulations may comprise the steps of:
- purifying and neutralizing the initial molecules (Cationic substances and molecules) by removing salts using customized filtration and purification methods, including but not limited to Dialysis, osmotic filtration, solvent washing, IX resin columns, and beds, and adding neutralizing agents like different acids or bases.
- tailoring the hydrophobicity by mixing 1% to 25 % (w/w) or ( v/v) of viscosity modifiers or/and amphoteric or positively charged softeners into the formulation included but not limited to ethylcellulose, methylcellulose, polyacrylates or acrylate copolymer, natural thickeners as well as swelling agents such as PEG, softeners including but not limited to: 1. Cationic softeners such as N, N-distearyl-N,N-dimethyl ammonium chloride (DSDMAC), Imidazolines, Esterquats, Quaternary ammonium compounds, Fatty alcohol-based, Polyamine based, dicyandiamide and stearyl amine; 2. Non-Ionic softener such as wax and polyethylene emulsions, glycerol monostearate, ethoxylates of fatty acids, ethoxylates of fatty amines, castor oil, ethoxylated fatty alcohol, ethoxylated fatty esters; 3. Amphoteric softeners such as substituted amino acids, amine oxide, betaine and sulfobetaine, amphoteric imidazoline\silicone based PU based; and 4. silicone softener such as Polydimethylsiloxane (PDMS), polymethyl hydrogen siloxane (PMHS), amino-functional silicone, epoxy silicone, amino silicones, hydrophilic silicones:

- increasing the wash durability by adding by mixing/stirring/shaking 1% to 25% (w/w) or (v/v) zwitterions and/or Amphoteric functional groups or and Vinylphosphonic acid, poly(vinylphosphonic acid) and/or its copolymers and/or its derivatives such as poly(vinyl phosphonates) and poly(vinyl phosphine oxides) into the formulation to increase the washing durability of the treated surface.
- covalently or permanently binding or attach the aforementioned positively charged substances to the surface of substrate by adding crosslinkers including but not limited to urea-formaldehyde and melamine-formaldehyde compounds, dimethylol ethylene urea (DMEU), DMDHEU carbamate esters phosphinic bis succinic acid based, acrylate binder, acrylonitrile based binders alkyl binder isocyanate blocked copolymer and aziridine based Poly-carbodiimide to attach polymers to the substrate including textiles (woven, nonwoven), inert fibers and 3D surfaces.
- adding photo initiators such as UV, LED photo initiators, solvent based photo-initiators, water soluble photo-initiators such as [2-Methacryloyloxy)ethyl] trimethylammonium chloride solution, Vinyltrimethoxysilane, Lithium phenyl-2,4,6-trimethylbenzoylphosphinate, 2,2'-Azobis (2-methylpropionamidine) dihydrochloride, 2-Hydroxy-4'-(2-hydroxyethoxy)-2-methylpropiophenone, 4,4'-Azobis(4-cyanovaleric acid), 2-Benzyl-2-(dimethylamino)-4'-morpholino butyrophenone, 4,4'-Bis(diethylamino)benzophenone, phenylbis(2,4,6-trimethylbenzoyl)phosphine oxide (TPO), Benzophenone Cerium (IV) ammonium nitrate to attach monomers to the surface like glass, silicon, rubber, nitrile rubber, natural rubber, soft and hard PU based coating, varnishes, paints, polymeric surfaces including TPU,PE, LDPE, PET or UV, heat, visible light and air curable water and solvent based coatings to permanently attach the formulation to all aforementioned surfaces:

- optimization of the protonation level for maximizing the generated charge on the surface of the substrate by modifying the pH of the formulation and maximizing the charge effect on the treated surface of the substrate by either increasing or decreasing the surface charge based on the final application by using acidifying agents like organic acids e.g. citric acid or inorganic acids like HCl or alkalizing agent or buffer, as needed for the end-use application to perfect the formulation in order to enable covalent binding of the formulation to different substrates like woven or non-woven textile, glass, nitrile rubber, rubber, PU and water-based PU varnishes, plastic, polymeric, PVC and metal surfaces.
- stabilizing the formulation, if and only if formulation is not stable and homogenous in its original form. After mixing the different components and pH change, if the formulation is not stable and phase separation happens the formulation may be stabilized by adding emulsifiers stabilizers like waxes, lipids, and polymeric stabilizers and/or by using high power mixing methods like ultrasound.
- optionally, freeze drying and milling the mixture obtained after mixing of various components, pH change, and optionally adding stabilizers by methods such as ball milling, cryo-milling to achieve particle size preferably between 5 to 50 microns so that the formulation can be used in specific applications such as plastics compounding, extrusion or injection molding.

The electrical potential of the surface of the substrate to which the non-biocidal antimicrobial formulation of the present invention is applied may be increased by at least 10 mV, preferably at least 30 mV, more preferably at least 40 mV, even more preferably at least 50 mV, most preferably at least 60 mV, when measured according to the zeta-potential measurement method.

The antimicrobial formulation of the present invention, by adding amphoteric or zwitterionic type of softeners with functional groups, does not become ineffective when the substrate comes in contact with anionic detergents, other surface cleaners, or biological medium with high concentration of proteins and salts. Such softeners may be selected from polymer or monomer like Vinyl Phosphonic Acid.

The cationic optical brightening agents (OBAs) may be added to the antimicrobial formulation so that crosslinking and covalent bonding of the formulation does not get affected, as compared to very weakening bonding which results with the use of traditional OBAs. Also, cationic OBA does not affect the charge intensity on the surface of the substrate to which the non-biocidal antimicrobial formulation of the present invention is applied.

The non-biocidal antimicrobial formulation can be used in one time use applications. The non-biocidal antimicrobial formulation of the present invention leads to disinfected substrate which can be reused without further application of the non-biocidal antimicrobial formulation of the present invention. Thus, a major use of this technology is for non-woven textiles, both synthetic and cellulosic such as paper that have single use properties. The problem with such substrates is the production process is at high speeds sometimes upwards of 400 meters per minute, and furthermore it is desirable that the pickup of the disinfectant is restricted to a maximum of 12% during the application process so that the substrate can be dried in the short time needed. In this case quick drying crosslinkers along with viscosity modifiers and amphoteric functional groups are added to the formulation so that pick up of the wet chemical is kept to <12%, preferably 6%, and that low temperature or air drying is possible during existing production processes.

The leaching of the positively charged compound from the article treated with the non-biocidal antimicrobial formulation of present invention is preferably less than MIC, thereby confirming that the antimicrobial action of the non-biocidal antimicrobial formulation of the present invention on a treated substrate remains intact even after substrate is in a solution form.

A substrate treated with the non-biocidal antimicrobial formulation of the present invention may possess the following properties:
∘ The surface doesn't leach or leaches less than MIC values of the targeted microorganisms.
∘ Polycationic polymers or monomers are permanently bound to the surface.
∘ There is no other chemical in the system which shows antibacterial properties.
∘ The polycationic surface carries a positive charge, and the accumulation of the positive charge is above a certain threshold.

The present invention provides an antimicrobial formulation which may be in the form of a liquor or a powder or a paste or a suspension that doesn't show antimicrobial properties in its original form but (based on the principle leaching and MIC), can be applied to or covalently bound to or crosslinked to surfaces or substrates or lead to the product such as a paint or a detergent having antimicrobial properties. The surfaces or substrates on which the non-biocidal antimicrobial formulation of the present invention may be applied include:
· Textiles
· Non-Woven Textiles either melt blown, spun bond or similar.
· Latex & Nitrile
· Paper
· Plastics
· Glass
· Metal
· Paint
· Detergent and additives
· Many other similar surfaces or substrates.

In this specification, we provide a method to establish that the supplied product comprising the antimicrobial formulation of the present invention is affixed to the surface of substrate so that the surface of the substrate has a net positive charge of upwards of ζ-potential = +20mV.

The antimicrobial formulation of present invention results in the treated substrate or surface possessing antimicrobial and, if needed, antifungal properties and this occurs preferably only either due to physical mode of action or in the case of antifungal properties due to the organic and natural nature of the antimicrobial formulation of present invention so used.

In some embodiments of the present invention one or more natural fungicides are mixed or combined with the antimicrobial formulation of present invention whenever the application is required to prevent mold, rot etc., and the resultant formulation may be in the form of liquor, paste, powder, or suspension, as needed.

The problem with use of many polycationic polymers is that since these polymers, in their polymeric state, kill albeit physically they are considered as biocides, and they do not pass the exemption criteria for the pure physical kill, which requires them to be inert in their natural state. A typical example are quaternary ammonium compounds which kill physically but are considered biocides in their inert form.

In order to do a quick check for leaching a conductivity study with the following SOP was used.

### Principle

Since most chemicals applied to the fabric are ionic in nature their leaching increases the conductivity of the water. Therefore, conductivity is one indicator which can be used to assess leaching (the pH value can be used in case the leaching of acids or bases are expected).

The treated fabric after washing is leached 5 times with deionized water or fewer times if the conductivity in the rinsing water is constant and close to the pure water used.

The leachates can be characterized by conductivity, zone of inhibition test, or growth inhibition testing. Typically, the following quality controls should be done before and after the leaching test: Bromothymol staining, FTIR analysis, antimicrobial activity AATCC 100, zone of inhibition test.

### Material

Erlenmeyer flasks with baffles, Rotary shaker or rotary water bath, Conductivity meter, pH meter, deionized water or water with similar quality.

### Procedure

1 Take 10g of dry treated and washed fabric and weigh it.
2 Put the fabric into an Erlenmeyer flask with baffles.
3 add 100 ml of deionized water (if the fabric is not fully immersed, add more water up to 300 ml).
4 Shake the Erlenmeyer in the rotary water bath at a temperature of 40 degrees C for 30' (set the speed so that water and fabric are vigorously shaken).
5 Measure conductivity and pH value.
6 Drain the fabric by squeezing it manually.
7 If conductivity and/or pH value differ from the last rinsing step or differ from the water used, add an additional rinsing step (repeat steps 2-6), otherwise proceed to step 8 Remark: Typically, < 2uS/cm are reached.
8 After the last rinsing step squeeze the fabric manually and dry it.
9 Record conductivity and pH value.

In some embodiments, the antimicrobial formulation of the present invention works by Physical Killing mechanism of action and the polymers after being functionalized are immobilized on the surface or substrate without any chemical or biochemical mechanism involved. This property of the formulation of the present invention was assessed by determination of following 2 step criteria and the existence of Physical Killing mechanism was confirmed if the formulation fulfilled said criteria:

### Step 1

- The presence of a positive charge has to be shown on the material so treated.
- Using standard leaching protocols, it has to be proven that the leachate does not show any antimicrobial properties.

This is the basic study that needs to be done. If the formulation passes this basic test, then additional tests were conducted as further confirmatory tests, which are briefly elaborated below:

### Step 2

- Preparing a substrate for the test (an example of proof of concept)
   Several samples were chosen and treated. The data from the test conducted on these treated materials more show that any killing mechanism can only be due to a Physical mode of action.
   ∘ A Polyester Fabric,
   ∘ A extruded LDPE food grade film, and
   ∘ A PU coated PVC floor tile with an addition of the chemistry in the coating.
- Leaching studies were conducted to show that the leachate if any has none or less than Minimum Inhibitory Concentration (MIC) of the substance used. Essentially proving that any substance that leaves the material has no capability for killing of microbes.
- Studies were conducted to prove that the functionalized material has a positive charge and that this could be blocked. With this one, it was proven that if the charge is blocked, killing action on the material ceases.
- A test was conducted to show that the protonation on a molecule or polymer can be modified by pH modification (adjusting surface protonation level by pH alternation).
- In order to prove that the action is not biochemical or chemical, studies were conducted at different metabolically active states of bacteria. If they show that the antimicrobial performance is the same across all states, then the activity cannot be considered to be anything other than physical.
- A final test was conducted by using a mutant bacteria wherein the cell wall charge is altered. If the higher charged bacteria show higher antibacterial activity then it will prove that this is a direct result of the positively charged materials. A chemical or biochemical reaction would be agnostic to such a change.
- A user test was conducted to ensure that efficacy of the treated substrate is not affected by anionic staining thereby rendering the treatment ineffective. This is an important aspect to the success of such a treatment.

Therefore, a series of complex tests involving a variety of materials were conducted to prove in the first instance that the killing mechanism was physical in nature, and not chemical or biochemical.

In an embodiment, the non-biocidal disinfectant formulation of present invention may comprise:
- **Cationic component** comprising polymers, monomers, peptides either individually or in combination, which may be selected from but not limited to following:
   ∘ **Polymers** such as PVAm such as Lupamine from BASF, PDAm, PAA, chitosan.
   ∘ **Monomers** such as Metac VISIOMER^{®} TMAEMC from Evonik, ADAMQUAT MC 80 from Arkema, DIMETHYLAMINOETHYL ACRYLATE (ADAME) from Arkema, MADQUAT MC 75 from Arkema, Diallyldimethylammonium Chloride solution (DADMAC from Aldrich), peptides such as Arginine, Nisin, Guanidine hydrochloride.
- **Viscosity modifying agents** includes but is not limited to ethyl cellulose, methylcellulose, polyacrylates or acrylate copolymer such as Acusol 445 from DOW, natural thickeners as well as swelling agents such as PEG, softeners including but not limited to:
   **1. Cationic softeners** includes but is not limited to N, N-distearyl-N,N-dimethyl ammonium chloride (DSDMAC), Imidazolines, Esterquats like SPEPANTEX from STEPAN, Quaternary ammonium compounds, Fatty alcohol-based, Polyamine based dicyandiamide, and stearyl amine; Persoftal BT from Tanatex and Hydrosil 8900 from Britacel.
   2. **Non-Ionic softeners** includes but is not limited to wax and polyethylene emulsions, glycerol monostearate, ethoxylates of fatty acids, ethoxylates of fatty amines, castor oil (Esteem 10-BN from ESTEEM Industries), ethoxylated fatty alcohol, ethoxylated fatty esters.
   3. **Amphoteric softeners** includes but is not limited to substituted amino acids, amine oxide, betaine and sulfobetaine, amphoteric imidazoline\silicone-based PU-based like Lurapret NDPS from Archroma.
   4. **Silicone softeners** includes but is not limited to Polydimethylsiloxane (PDMS), polymethyl hydrogen siloxane (PMHS), amino-functional silicone, epoxy silicone, amino silicones, hydrophilic silicones like Ultratex FMW from Huntsman.
- **Cationic cross-linkers** includes but is not limited to urea-formaldehyde and melamine-formaldehyde compounds, dimethylol ethylene urea (DMEU), DMDHEU carbamate esters phosphonic bis succinic acid based, acrylate binder like Arkophob DAN from Archroma, acrylonitrile-based binders alkyl binder isocyanate blocked copolymer (Meikanate Cx from Asahiguard and NK Assist from Archroma) and aziridine based Poly-carbodiimide like CX-100 from DSM.
- **Photo initiators** includes but is not limited to UV, LED photo initiators, solvent based photo-initiators, water soluble photo-initiators such as [2-Methacryloyloxy)ethyl] trimethylammonium chloride solution, Vinyltrimethoxysilane, Lithium phenyl-2,4,6-trimethylbenzoylphosphinate, 2,2'-Azobis (2-methylpropionamidine) dihydrochloride, 2-Hydroxy-4'-(2-hydroxyethoxy)-2-methylpropiophenone, 4,4'-Azobis(4-cyanovaleric acid), 2-Benzyl-2-(dimethylamino)-4'-morpholino butyrophenone, 4,4'-Bis(diethylamino)benzophenone, phenylic(2,4,6-trimethylbenzoyl)phosphine oxide (TPO), Benzophenone Cerium (IV) ammonium nitrate ).
- **pH modifiers** include but are not limited to acidifying agent like organic acid, e.g., citric acid, or inorganic acids like sulphuric acid, hydrochloric acid, and nitric acid.
- **Ionic repelling agent** includes but is not limited to zwitterions and/or amphoteric functional groups or and vinyl phosphonic acid, poly (vinyl phosphonic acid) and/or its copolymers and/or its derivatives such as poly(vinyl phosphonates) and poly(vinyl phosphine oxides).
- **Stabilizing Agent** includes but is not limited to waxes, lipids, and polymeric stabilizers like Prestogen, Archroma.
- **Solvents** includes but is not limited to water, isopropyl alcohol, acetone, and others.

The present invention provides a non-biocidal disinfectant comprising:
- a cationic component comprising polycationic polymers, monomers, amino acids, peptides or combinations thereof;
- viscosity modifying agent;
- pH modifier;
- ionic repelling agent; and/or
- cationic crosslinkers;
wherein the antimicrobial disinfectant preferably repels anionic substances and preferably kills microbes by physical means.

In an embodiment, the polymers used are selected from group of polyvinylamine (PVAm), poly(N-dimethylaminoethylmethacrylate) (PDAm), polyacrylicacid (PAA), chitosan, and Polyethyleneimine (PEI).

In an embodiment, the monomers used are selected from group of metac, acryloxyethyltrimethyl ammonium chloride, dimethylaminoethyl acrylate, methacryloxyethyltrimethyl ammonium chloride, diallyldimethylammonium chloride solution.

In an embodiment, the peptides used are selected from group of arginine, nisin, guanidine hydrochloride.

In an embodiment, the disinfectant when affixed to a surface can impart to said substrate a net positive charge of upwards of +10mV ζ-potential.

In an embodiment, the disinfectant further comprises natural fungicides.

In an embodiment, the viscosity modifying agent used is selected from the group of ethyl cellulose, methylcellulose, polyacrylates or acrylate copolymer, natural thickeners, swelling agents, softeners, or combinations thereof.

In an embodiment, the softeners used are selected from cationic softeners, non-ionic softeners, amphoteric softeners, silicone softeners, or combinations thereof.

In an embodiment, the cationic softeners used are selected from the group of N, N-distearyl-N,N-dimethyl ammonium chloride, Imidazolines, Esterquats, Quaternary ammonium compounds, Fatty alcohol-based, Polyamine based dicyandiamide, and stearyl amine; Persoftal BT, and Hydrosil 8900.

In an embodiment, the non-ionic softeners used are selected from the group of wax, polyethylene emulsions, glycerol monostearate, ethoxylates of fatty acids, ethoxylates of fatty amines, castor oil, ethoxylated fatty alcohol, ethoxylated fatty esters, or combinations thereof.

In an embodiment, the amphoteric softeners used are selected from the group of amino acids, amine oxide, betaine, sulfobetaine, amphoteric imidazoline, silicone based, polyurethane based, or combinations thereof.

In an embodiment, the silicone softeners used are selected from the group of polydimethylsiloxane, polymethyl hydrogen siloxane, amino-functional silicone, epoxy silicone, amino silicones, hydrophilic silicones, or combinations thereof.

In an embodiment, the cationic cross-linkers used are selected from the group of urea-formaldehyde and melamine-formaldehyde compounds, dimethylol ethylene urea, DMDHEU carbamate esters phosphonic bis succinic acid based, acrylate binder, acrylonitrile-based binders alkyl binder isocyanate blocked copolymer, aziridine based poly-carbodiimide, or combinations thereof.

In an embodiment, the photo initiators used are selected from UV, LED photo initiators, solvent based photo-initiators, water soluble photo-initiators, [2-Methacryloyloxy)ethyl] trimethylammonium chloride solution, Vinyltrimethoxysilane, Lithium phenyl-2,4,6-trimethylbenzoylphosphinate, 2,2'-Azobis (2-methylpropionamidine) dihydrochloride, 2-Hydroxy-4'-(2-hydroxyethoxy)-2-methylpropiophenone, 4,4'-Azobis(4-cyanovaleric acid), 2-Benzyl-2-(dimethylamino)-4'-morpholino butyrophenone, 4,4'-Bis(diethylamino)benzophenone, phenylic(2,4,6-trimethylbenzoyl)phosphine oxide (TPO), Benzophenone Cerium (IV) ammonium nitrate.

In an embodiment, the pH modifiers used are acidifying agents which are organic acid, inorganic acid, or combination thereof.

In an embodiment, the organic acid used is citric acid.

In an embodiment, the inorganic acid used is sulphuric acid, hydrochloric acid, and nitric acid.

In an embodiment, the ionic repelling agent used is selected from zwitterions, amphoteric functional groups, vinyl phosphonic acid, poly (vinyl phosphonic acid), poly (vinyl phosphonic acid) copolymers, poly (vinyl phosphonic acid) derivatives, or combinations thereof.

In an embodiment, the poly (vinyl phosphonic acid) derivatives used are poly(vinyl phosphonates), poly(vinyl phosphine oxides), or combinations thereof.

In an embodiment, the stabilizing agent used is selected from waxes, lipids, polymeric stabilizers, or combinations thereof.

In a second aspect, the present invention provides a method of preparation of the disinfectant comprising the steps of:
∘ taking polycationic polymers, monomers, amino acids and peptides that are inherently not antimicrobial in nature.
∘ processing polycationic polymers, monomers, amino acids and peptides by, optionally deprotonating, neutralizing followed by protonating.
∘ optionally adding a compatible viscosity modifying agent, pH modifier, ionic repelling agent, cationic crosslinkers to the treated materials of above step to obtain the disinfectant.
∘ optionally adding photo initiators in the above step.
∘ optionally freeze drying and milling the non-biocidal disinfectant.
∘ optionally adding stabilizers by ball milling or cryo-milling.

A formulation of the disinfectant may be a liquor, paste, powder, or suspension.

Adjuvents may be added to the disinfectant of the present invention to form the formulation.

The formulation of the disinfectant of the present invention may further comprise cationic optical brightening agents.

### EXAMPLES

### Example 1: Method of treating Cellulose based textiles, fibers & yarns

Treating cellulose-based textiles, fibers and yarns is a complex issue. This material has a natural source so the surface of the fibers can change from one batch to another so it's desirable to create a formulation which can form covalent bonds to the material regardless their differences in the surface properties and number of functional groups like carboxylic groups (COOH) on cotton. Further most cellulose that is used for such applications needs to be white, withstand bleach and highly anionic washing media. It further should have high anionic repelling properties when it is exposed to alkaline conditions. For the purpose of this experiment a white fabric weighing 180 GSM was used made of 100% cotton combed yarn.

### Step 1: Creating a Liquor

For this purpose, a Liquor was made comprising of the following components:
- Lupamin 20 GPL
- PAS 21 CL (Poly diAllylamine hydrochloride) 20 GPL duly modified and neutralized
- Arginine 10 GPL
- Softycon MUN 20 GPL
- Leucophor FTS 2 GPL (OBA)
- Citric Acid 0.3 GPL
- IPA - 5 GPL
- Balance - 922.7 GPL water

The Liquor was adjusted to have a pH of 7.

Softycon MUN is an amphoteric softener which becomes negatively charged when exposed to alkaline mediums and is otherwise positively charged.

### Step 2: Method of applying the Liquor

The method of applying the Liquor to the cellulose is by exhaust methods, whether or not, it is in textile form, Fiber or yarn form.

A jigger was used for this experiment. It is also possible to use various types of continuous dyeing and bleaching machines. The liquor was heated to a temperature of 80°C in a ratio of 1:5 for fabric to Liquor. The fabric was then subjected to exhaustion in the Jigger for 1 Hour. Subsequently the wet fabric was dried in a stenter frame at 120° C and then cured at 180°C. A subsequent rinsing cycle was performed to remove any superficial unbound chemicals and dried at 120°C.

### Step 3: Method of testing the treated Substrate

The fabric was then subjected to the following tests:
Antimicrobial Performance based on AATCC 100 for bacteria and Virus (MS2).

The fabric showed >3 Log Antibacterial and Antiviral performance at a contact time of 1 hour after 5 home laundries using Tide detergent (Anionic) and washed using AATCC protocol for home laundry wash -2018. The untreated fabric displayed no activity whatsoever.

Leaching Study using the conductivity method was conducted in an unwashed stage and after 5 washes.

An Anti-Odor test was conducted using ISO 17299-3 protocol and showed 100% effectiveness after 5 washes.

A Cationic charge measurement was done using Anton Paar Surpass 3 Zeta Potential Measuring l XYZ and a charge of 51.6 mV was measured in an unwashed state and was measured at 47.6 mV after 5 home launderings.

Both the untreated fabric and the treated fabric displayed a conductivity of roughly 3.8 Microsiemens in the unwashed and after the 5-wash stage.

### Step 4: Following analytical data substantiates that the treated substrate has Antimicrobial Properties

| | **Untreated sample** | **Treated sample** |
|---|---|---|
| Conductivity value in deionized water [µS/(cm] | 3 | 4.1 |
| Corresponded concentration of formulation (g/L) | N/A | 0.011 |

| | **Untreated sample** | **Treated sample** | **Treated sample (blocked)** |
|---|---|---|---|
| Surface charge | -25 mV | 20 mV | -18 mV |
| Antibacterial performance (log reduction) | 0.04 | 3.8 | 0.08 |

| | **Untreated sample** | **Treated sample (PH 6.5)** | **Treated sample (pH 9)** |
|---|---|---|---|
| Surface charge | -25 | 20 | 8 |
| Antibacterial performance | 0.04 | 3.8 | 1.2 |

Based on the above data it was shown that the treated cotton fabric displayed physical antimicrobial mechanism.

### Example 2: Method of treating Polyester Based Textiles, Fibers and yarns

Treating Polyester based textiles, fibers and yarns is a complex issue as it requires creating bonds with external chemistry in the rubberized state so that the chemistry can be effectively trapped, and a physical bond created between the chemistry and the fabric. Furthermore, Polyester tends to smell, and hence anti odor performance is also desirable.

### Step 1: Creating a Liquor

For this purpose, a Liquor was made comprising of the following components:
- Lupamin 9095(BASF) 20 GPL
- PAS 21 CL 30 GPL duly modified and neutralized
- Softycon MUN 20 GPL
- Cationic Binder Meikanate CX 20 Gpl
- Citric Acid 0.3 GPL
- IPA - 5 GPL
- Balance - 904.7 GPL water

The Liquor was adjusted to have a pH of 5.

As mentioned above, Softycon MUN is an amphoteric softener which becomes negatively charged when exposed to alkaline mediums, and is otherwise positively charged.

### Step 2: Method of applying the Liquor

The method of applying the Liquor to the cellulose is by exhaust methods, whether or not it is in textile form, fiber or yarn form.

In this example the formulation was applied to a Polyester textile weighing 130 GSM. A jigger was used for this experiment. It is also possible to use various types of Jet or softflow, continuous dyeing and bleaching machines. The liquor was heated to a temperature of 95°C in a ratio of 1:4 for fabric to Liquor. The fabric was then subjected to exhaustion in the jigger for 1 hour. Subsequently the wet fabric was dried in a stenter frame at 120° C and then cured at 150°C. A subsequent rinsing cycle was performed to remove any superficial unbound chemicals and dried at 100°C.

### Step 3: Method of testing the treated Substrate

The fabric was then subjected to the following tests:
Antimicrobial Performance based on AATCC 100 for bacteria and Virus (MS2).

The fabric showed > 3 Log Antibacterial and Antiviral performance at a contact time of 1 hour after 5 home laundries using Tide detergent (Anionic) and washed using AATCC protocol for home laundry wash-2018. The untreated fabric displayed no activity whatsoever.

Leaching Study using the conductivity method was conducted in an unwashed stage and after 5 washes which showed a reading of 3.87 Microsiemens post rinsing which was within 0.3 Microsiemens of untreated fabric

An Anti-Odor test was conducted using ISO 17299-3 protocol and showed 100% effectiveness after 5 washes.

A Cationic charge measurement was done using Anton-Paar Surpass 3 Zeta Potential Measuring device. Charge of +18 mV was measured in an unwashed state and was measured at +12 mV after 5 home laundering sessions.

Both the untreated fabric and the treated fabric displayed a conductivity of roughly 3.8 Microsiemens in the unwashed and after the 5-wash stage.

### Chameleon effect

Samples were treated with aforementioned formulation with and without Softycon MUN to evaluate the effect of using amphoteric softener on blocking behavior of the sample due to laundry, samples were washed 15 times based on AATCC 61 IIA and they were tested for their antibacterial performance.

As it is demonstrated in the table below sample with softycon lost its performance slightly while the sample without softycon lost its activity completely.

| | Antibacterial performance before washing | Antibacterial performance after ×15 washing |
|---|---|---|
| | AATCC 100 (@ 24h) | AATCC 100 (@ 24h) |
| Polyester sample treated with chameleon formulation | 4.2 Log reduction | 3 log reduction |
| Polyester sample treated without chameleon formulation | 4 log reduction | 0.8 log reduction |

### Step 4: Proving that the treated substrate has antimicrobial properties

| | **Untreated sample** | **Treated sample** |
|---|---|---|
| N-content (ppm) | 24 | < 5 |
| corresponded concentration of formulation (ppm) | N/A | < 15 |

| | **Untreated sample** | **Treated sample** | **Treated sample (blocked)** |
|---|---|---|---|
| Surface charge | -44 mV | +18 mV | -40 mV |
| Antibacterial performance (log reduction) | 0.02 | 3.49 | 0.3 |

| | **Untreated sample** | **Treated sample (pH 6.5)** | **Treated sample (pH 9)** |
|---|---|---|---|
| Surface charge | -44 mV | +20 mV | +4 mV |
| Antibacterial performance (log reduction) | 0.02 | 4.8 | 2.7 |

Based on the above data it was shown that the treated Polyester fabric displayed physical antimicrobial mechanism.

### Example 3: Method of treating PVC Based Flooring tiles/sheets

Treating synthetic PVC floor tiles was contemplated. It was noticed that in the common production process of such PVC tiles, a PU based Photo Initiating coating between 5 and 16 GSM is made. It was therefore decided to find a method of adding chemistry to the existing coating in order to impart additional functionality of Antimicrobial and stainproof properties.

### Step 1: Creating a Liquor

For this purpose a Liquor was made comprising of the following components
- 92% of the existing PU based coatings - solvent based PU coating counting silicon oxide particles.
- 4% of METAC (VISIOMER^{®} TMAEMC).
- 1.5% of VPA.
- 2.5% (Evonik, TEGO^{®} Rad 2700) Hydrophobic Monomer.

In this example, the PU acts as the carrier.

VPA means Vinylphosphonic acid, which is a monomer which becomes negatively charged when exposed to alkaline mediums and is otherwise positively charged.

### Step 2: Method of applying the Liquor

For this experiment the method of applying the Liquor to the PVC Tile material a coating thickness was selected of 12 GSM. The UV curing lights had a wavelength of 395 nm and a dwell time of 8 seconds.

The liquor was applied by an automatic roller coater with a weight of 12 GSM +/- 2%.

### Step 3: Method of testing the treated Substrate

The treated PVC tiles were then subjected the following 3 tests:
- Antibacterial Performance based on ISO 22196 which showed an activity of > 4 logs after 1 hour of contact.
- Antiviral Performance based on ISO 21702 which showed an activity of > 3 logs after 1 hour of contact time using HCOV 229 E coronavirus.
- Stain Resistance using Betadine.

A Cationic charge measurement was done using Anton-Paar Surpass 3 Zeta Potential Measuring device model and a charge of + 45 mV was measured.

### Chameleon effect

Samples were treated with formulation with and without PVA to evaluate the effect of using such molecules on blocking behavior of the sample due to cleaning. samples were wiped with anionic detergent 50 times, and they were tested for their antibacterial performance.

As it is demonstrated in the table below sample with PVA lost its performance slightly while the sample without PVA lost its activity completely.

| | Antibacterial performance before wiping | Antibacterial performance after ×50 wipes |
|---|---|---|
| | ISO 22196 (@ 24h) | ISO 22196 (@ 24h) |
| PVC flooring treated with chameleon formulation | 5 Log reduction | 4.1 log reduction |
| PVC flooring treated without chameleon formulation | 4.8 log reduction | 0.2 log reduction |

### Step 4: Proving the treated substrate has Antimicrobial Properties

| | **Untreated sample** | **Treated sample** |
|---|---|---|
| Conductivity value in deionized water | 3.8 | 5.4 |
| Corresponded concentration of formulation | N/A | less than 10 ppm |

| | **Untreated sample** | **Treated sample** | **Treated sample** |
|---|---|---|---|
| | | | **(blocked)** |
| Surface charge | -16 mV | +45 mV | -10 mV |
| Antibacterial performance | 0 | 4.8 | 0.09 |

| | **Untreated sample** | **Treated sample** | **Treated sample** |
|---|---|---|---|
| | | **(pH 6.5)** | **(pH 9)** |
| Surface charge | -16 mV | +45 mV | +22 |
| Antibacterial performance | 0 | 4.8 | 3.1 |

Based on the above data it was shown that the treated PVC tile displayed physical antimicrobial mechanism besides excellent stain repellency characteristics.

### Example 4: Method of treating Synthetic Packaging Material such as Paper and Plastic that can be used for food packaging and contact.

Treating packaging material such as plastic and paper films was contemplated. It was noticed that during the processing of such materials a lacquer containing Photo Initiating inks or lacquers are applied between 2 and 5 GSM. It was therefore decided to find a method of adding chemistry to the existing inks and lacquers in order to impart additional functionality of Antimicrobial and Antioxidative properties. In this way the coating would stop the penetration of oxygen in the packaged materials extending food life and also making the packaging entirely biodegradable.

### Step 1: Creating a Liquor

For this purpose, a Liquor was made comprising of the following components:
- 92% of the existing Lacquer based varnish for packaging material and inks,
- 4% of METAC (Evonik VISIOMER^{®} TMAEMC),
- 1.5% of VPA,
- 2.5% of Glucose Oxidase Enzyme as oxygen excavator.

In this example, the Lacquer based varnish acts as the carrier.

### Step 2: Method of applying the Liquor

For this experiment the method of applying the Liquor to the Paper based packaging paper a coating thickness was selected of 3 GSM. The UV curing lights had a wavelength of 395 nm and a dwell time of 5 seconds.

The liquor was applied by an automatic screen print coater with a weight of 3 GSM +/- 2%.

### Step 3: Method of testing the treated substrate

The treated packaging paper was then subjected the following 3 tests:
- Antibacterial Performance based on ISO 22196 which showed an activity of > 4 logs after 1 hour of contact.
- Permeability analysis for oxygen and vapor.

A Cationic charge measurement was done using Anton-Paar Surpass 3 Zeta Potential Measuring device and a charge of + 35 mV was measured.

### Step 4: Proving that the treated substrate has antimicrobial properties

| | **Untreated sample** | **Treated sample** |
|---|---|---|
| Conductivity value in deionized water (µS/cm) | 4 | 18 |
| Corresponded concentration of formulation | N/A | 50 ppm |

| | **Untreated sample** | **Treated sample** | **Treated sample** |
|---|---|---|---|
| | | | **(blocked)** |
| Surface charge | -10 | +35 | -1 |
| Antibacterial performance | 0 | 4.2 | 0.2 |

| | **Untreated sample** | **Treated sample** | **Treated sample** |
|---|---|---|---|
| | | **(pH 6.5)** | **(pH 9)** |
| Surface charge | -10 | +35 | +14 |
| Antibacterial performance | 0 | 4.2 | 2.4 |

Based on the above data it was shown that the treated packaging paper displayed physical antimicrobial mechanism besides oxygen blocking characteristics.

### Example 5: Method of treating wood used in flooring applications and furniture

Treating wooden floor tiles was contemplated. It was noticed that in the production process of such PVC tiles, a lacquer-based photo initiating varnish coating between 25 and 50 GSM is used. It was therefore decided to find a method of adding chemistry to the existing coating in order to impart additional functionality of antimicrobial, scratch proof and washable properties.

### Step 1: Creating a Liquor

For this purpose, a Liquor was made comprising of the following components:
- 88.5 % of the existing Lacquer based coatings.
- 6% of METAC (Evonik VISIOMER^{®} TMAEMC).
- 2% of VPA.
- 3.5% (Evonik TEGO@ Rad 2700) Hydrophobic Monomer.

In this example, the Lacquer varnish acts as the carrier.

VPA means vinyl phosphoric acid, which is a monomer which becomes negatively charged when exposed to alkaline mediums, and is otherwise positively charged.

### Step 2: Method of applying the Liquor

For this experiment the method of applying the Liquor to the wooden material was roller coating or knife coating. A coating thickness was selected of 30 GSM. The UV curing lights had a wavelength 359 nm and a dwell time of 8 seconds.

The liquor was applied by a knife coater with a weight of 30 GSM +/- 2%.

### Step 3: Method of testing the treated substrate

The treated wood was then subjected to following 3 tests:
- Antibacterial Performance based on ISO 22196 which showed an activity of > 4 logs after 1 hour of contact.
- Antiviral Performance based on ISO 21702 which showed an activity of > 3 logs after 1 hour of contact time using HCOV 229 E coronavirus.
- Ethanol Wash Performance for 10,000 Cycles was to show no drop in antimicrobial performance. This was an internal test and the results showed no drop in Antimicrobial performance.

A Cationic charge measurement was done using Anton Paar Surpass 3 Zeta Potential Measuring device model.

### Step 4: Proving that the treated substrate has antimicrobial properties

| | **Untreated sample** | **Treated sample** |
|---|---|---|
| Conductivity value in deionized water | 4.2 | 6 |
| Corresponded concentration of formulation | N/A | 10 ppm |

| | **Untreated sample** | **Treated sample** | **Treated sample (blocked)** |
|---|---|---|---|
| Surface charge | n/A | +46 | 10 |
| Antibacterial performance (log reduction) | 0.02 | 5 | 1.2 |

| | **Untreated sample** | **Treated sample (pH 6.5)** | **Treated sample (pH 9)** |
|---|---|---|---|
| Surface charge | N/A | +46 | +30 |
| Antibacterial performance | 0.02 | 5 | 4.1 |

Based on the above data it was shown that the treated wood displayed physical antimicrobial mechanism besides excellent stain repellency characteristics.

### Example 6: Method of treating Natural and Synthetic stone used for Kitchen tops, flooring and other similar uses

An identical experiment as that carried out with wood was conducted and similar results were obtained.

### Example 7: Method of treating Paints, Varnishes and other Surface finishes that can be air dried

Treating paints and Varnishes was contemplated. Since paints and varnishes already contain necessary chemistry that can activate the chemistry in the process or air drying, it was therefore decided to find a method of adding chemistry to the paints and varnishes in order to impart additional functionality of Antimicrobial, Antifungal and stain proof properties.

### Step 1: Creating a Liquor comprising of the paint along with the chemistry

For this purpose, a Liquor was made comprising of the following components:
- 93% of the existing paints formulations preferably with least anionic content.
- Metac (Evonik, VISIOMER^{®} TMAEMC).
- 1.5% of VPA.
- 1.5% (Evonik, TEGO@Rad 2700) Hydrophobic Monomer.

In this example, the paint formulation acts as the carrier.

VPA means vinyl phosphonic acid, which is a monomer which becomes negatively charged when exposed to alkaline mediums, and is otherwise positively charged.

### Step 2: Method of mixing the chemistry and applying on a surface

For this experiment the method of applying the Liquor to an artificial cement surface in a horizontal position was used. After applying the paint, it was allowed to dry at room temperature in natural conditions.

The liquor was applied by brush and sponge roller.

### Step 3: Method of testing the treated Substrate

The treated cement wall was then subjected to the following 3 tests:
- Antibacterial Performance based on ISO 22196 which showed an activity of > 4 logs after 1 hour of contact.
- Antiviral Performance based on ISO 21702 which showed an activity of > 3 logs after 1 hour of contact time using HCOV 229 E coronavirus.
- Antifungal Performance using AATCC 30 which showed a result of 0 even after 30 days of contact time.

A Cationic charge measurement was done using Anton-Paar Surpass 3 Zeta Potential Measuring and a charge of 40.9 mV was measured.

### Step 4: Proving that the treated substrate has antimicrobial properties

| | **Untreated sample** | **Treated sample** |
|---|---|---|
| Conductivity value in deionized water | 4 | 6 |
| Corresponded concentration of formulation | N/A | 10 ppm |

| | **Untreated sample** | **Treated sample** | **Treated sample (blocked)** |
|---|---|---|---|
| Surface charge | N/A | 40.9mV | 0 |
| Antibacterial performance (log resuction) | N/A | 4.8 | 0.12 |

| | **Untreated sample** | **Treated sample (pH 6.5)** | **Treated sample (pH 9)** |
|---|---|---|---|
| Surface charge | | 40.9mV | 35 |
| Antibacterial performance | | 4.8 | 4 |

Based on the above data it was shown that the treated cement wall displayed physical antimicrobial and antifungal mechanism besides excellent stain repellency characteristics.

### Example 8: Method of treating Medical Devices

For this experiment a catheter tube was created that would display the following characteristics:
- Antimicrobial Activity > 3 logs on outside surfaces.
- Biofilm formation Prevention.
- Cytotoxicity assessments.

A coating was to be added to the outside of the tube specially for prevention of Biofilms. For this purpose, a coating was to be applied.

### Step 1: Creating a Liquor

For this purpose, a Liquor was made comprising of the following components:
- 88.5 % of Medical Grade UV curable coating.
- 6% of METAC (Evonik, VISIOMER^{®} TMAEMC).
- 2% of VPA.
- 3.5% (Evonik, TEGO@Rad 2700) Hydrophobic Monomer.

In this example, the Medical Grade UV curable coating acts as the carrier.

VPA means vinyl phosphoric acid, which is a monomer which becomes negatively charged when exposed to alkaline mediums and is otherwise positively charged.

### Step 2: Method of applying the coating

For this experiment the method of applying the tube coating thickness was selected of 3 GSM. The UV curing lights had a wavelength of 395 nm and a dwell time of 8 seconds. The coating was applied in a standard bath with a residual time of 1 minute so that the material could effectively come in contact with the tube.

### Step 3: Method of testing the treated substrate

The treated tubed was then subjected to the following 3 tests:
- Antibacterial Performance based on ISO 22196 which showed an activity of > 4 logs after 1 hour of contact.
- Biofilm formation test done under flow test set-up, and the results showed no significant formation of Biofilm even after contact with Artificial urine for a period of 7 days.
- In vitro cytotoxicity assessment based on ISO-10993 is undergoing.

A Cationic charge measurement was done using Anton paar Surpass 3 Zeta Potential Measuring device model and a charge of 60 mV on the outside and 25 mV on the inside was measured. The charge measurements were done on the flat surface due to the limitations of the charge measurement device.

### Step 4: Proving that the treated substrate has antimicrobial properties blocking and surface charge alternation were carried out on the outer side of the catheters

| | **Untreated sample** | **Treated sample** |
|---|---|---|
| Conductivity value in deionized water | 10 | 4.5 |
| Corresponded concentration of formulation | N/A | 10 ppm |

| | **Untreated sample** | **Treated sample** | **Treated sample** |
|---|---|---|---|
| | | | **(blocked)** |
| Surface charge | -10 | +35 | -1 |
| Antibacterial performance | 0 | 4.2 | 0.2 |

| | **Untreated sample** | **Treated sample** | **Treated sample** |
|---|---|---|---|
| | | **(pH 6.5)** | **(pH9)** |
| Surface charge | -10 | +35 | +20 |
| Antibacterial performance | 0 | 4.2 | 3.8 |

Based on the above data it was shown that the treated catheter tube displayed physical antimicrobial mechanism, biofilm formation prevention as well as showed no skin sensitization.

### Example 9: Method of treating metallic based door openers

For this experiment it was decided to treat a metal door opener that would display the following characteristics:

### Step 1: Creating a Liquor

For this purpose, a Liquor was made comprising of the following components:
- 88.5 % of UV curable Lacquer for metal coating.
- 6% of METAC (Evonik,VISIOMER^{®} TMAEMC).
- 2% of VPA.
- 3.5% (Evonik, TEGO@Rad 2700) Hydrophobic Monomer.

In this example, the UV curable Lacquer acts as the carrier.

VPA means vinyl phosphoric acid, which is a monomer which becomes negatively charged when exposed to alkaline mediums and is otherwise positively charged.

### Step 2: Method of applying the coating

For this experiment the method of applying by spraying the material with a targeted thickness was selected of 12 GSM. The UV curing lights had a wavelength of 395 nm and a dwell time of 8 seconds. The coating was by spray painting so as to simulate powder coating for production purposes.

### Step 3: Method of testing the treated Substrate

The treated metal was then subjected to the following 3 tests:
- Antibacterial Performance based on ISO 22196 which showed an activity of > 4 logs after 1 hour of contact.
- Antiviral test based on ISO 21702, which showed activity > 3 logs using HCOV 229 E coronavirus.
- Extended use performance after 10,000 washes using ethanol showed no reduction in efficacy.

A Cationic charge measurement was done using Anton-Paar Surpass 3 Zeta Potential Measuring device model and a charge of 40 mV on the metal surface was measured. Due to the conductivity and hydrophobicity of these surfaces, the coating was tested on the glass surface for surface charge measurements.

### Step 4: Proving that the treated substrate has antimicrobial properties

| | **Untreated sample** | **Treated sample** |
|---|---|---|
| Conductivity value in deionized water | 1 | 5.8 |
| Corresponded concentration of formulation | N/A | 30ppm |

Based on the above data it was shown that the treated metal displayed physical antimicrobial mechanism despite being washed 10,000 times using ethanol.

### Example 10- method of dyeing Polyester/Cotton blended fabric

Dyeing of Polyester based textiles, fibres and yarns is a complex issue as it requires opening up the fabric pores with temperature in the rubberized state so that the dye chemistry can be effectively trapped, and a physical bond created between the chemistry and the fabric. Whereas cotton fabric requires salts like sodium sulphate or sodium chloride for exhaustion with reactive dye and fixation with cotton happens at alkaline pH using sodium carbonate. Furthermore, the dyeing of Polyester / Cotton blended fabric is even more complex as it needs two steps, i.e dyeing of polyester using disperse dyes and then cotton using reactive dyes. While such a blended fabric has many beneficial properties , the process of dyeing it is extremely complex and time consuming besides being extremely unsustainable due to high usage of salt and dye discharge in wastewater. Hence we were able to solve a very complex problem, and were able to dye such a blended fabric using a single step process and using only reactive dyes.

### Step 1: Preparing the fabric : Cationizing the fabric

For this purpose, a Liquor was made comprising of the following components:
- PAS 21 CL (10-15 gpl)
- Lupamin 9095 (40 gpl)
- L-Arginine 20 GPL
- Adjusting pH to 7 using NaOH
- Water was used as a carrier

### Step 2: Method of applying the Liquor

The Liquor was then put into a padding bath and the standard pad dry cure method was followed and the fabric was cationized. The pick up was 70% . A subsequent rinsing cycle was performed to remove any superficial unbound chemicals for 10 minutes at room temperature.

### Step 3: Method for Dyeing the fabric

Using a standard exhausting machine, a dye recipe was selected using
- Reactive dye having C/I Blue 21 from Dystar was selected.

The colour for dyeing was decided to be Turquoise Blue, which is very difficult to dye due to its metal complex structure, and is considered to be the one of most challenging colours in the textile Industry to dye and to get good colour fastness properties., besides evenness and depth.

An exhaust bath with a Fabric to Liquor ratio of 1:20 was prepared using 2 gpl levelling agent based on polyacrylate chemistry along with the fabric immersed for 10 minutes at room temperature. The fabric was then removed from the bath and a dye solution(based 4% depth) was added carefully in the bath and the solution was stirred properly until homogenous and then the fabric was reintroduced in the bath. At this point the fabric was exhausted in the bath for 15 minutes at room temperature and then 5gpl of soda ash was added to it and the fabric was exhausted at room temperature for an additional 15 min. The bath temperature was then raised to 80 deg C based on dye structure and the fabric was then exhaust dyed for 30-45 min and the liquor was then drained. The dyed fabric was washed with a cold wash and neutralised with 0.8 gpl Acetic acid. This was followed by washing with a washing off/Soaping Agent such as Dekol FBSN from Archroma (polyacrylate based) at 80 deg C to remove any unfixed colour from the fabric. Then the fabric was washed with cold water for 10 min to get the clear wash water. Then the fabric was dried at 120 deg C for 5 min.

The dyed was then subjected to the following tests:
- Colour fastness to washing for 30 washes using ISO 105 CO3 and the results were found to be > 3 which is acceptable for this colour. The eventual result as compared to conventional dyed fabric showed a significant improvement is colour fastness.
- Dimensional stability test (AATCC 135) - The results of this test showed that shrinkage was less than 3%, in both warp and weft directions.
- Rubbing Fastness Test (ISO -105-X12) - The results of dry and wet rub fastness were 3-4 and 3 respectively. This was 0.5-1 rating better than the conventional process.
- Computer Colour measurement was then conducted to compare against conventional dyed fabric and the deviation was found to be below 3%.

Hence it was found that using the technology fabrics could be dyed using no salt and also polyester blended fabrics could be dyed in a single step using only reactive dyes. This experiment was conducted to show that a permanent binding occurs between the cationic technology and the polyester fibres providing them with unheard of Versatility.

### Conclusion

Based on the provided information and experimental data it was is concluded that generated cationic charge on the surface of the substrates can give the surface antimicrobial properties. also it is showed that the cationic charge will allow for salt free dyeing as well as single step dyeing of Polyester blended fabric further enhances the premise that the cationic chemistry is permanently bound to polyester thereby allowing this material to have diverse properties that are normally not possible in Polyester.

Following it will be shown in detail why the antibacterial properties of such cationic surfaces are only because of the presence of accumulation charge and this property is not relevant to the chemistry and chemical properties.

### Proving that the antimicrobial efficacy is due to physical mode of action

A method is provided in which it can be proven that the treated substrate or surface has antimicrobial and if needed antifungal properties and that this occurs only either due to physical mode of action in the case of antifungal properties due to the organic and natural nature of the substance so used.

In this example it is seen that when disinfectant of the present invention is applied to a substrate the mode of action is only physical and happens upon the contact of the microbes with the treated surface and chemical reactions or leaching of the active material does not play any role in its activity.

A method for proving that specially treated surfaces and substrates show physical mode of action comprises the following steps:

### Preparing a Substrate for the test (an example to proof the concept)

For this test, the worst possible scenario was considered. A 100% polyester textile was chosen. Polyester is an inert material which does not react easily with any material. From the group of polycationic polymers, the weakest and most difficult to deal with polymer was taken. A liquor of Poly Vinyl Amine (PVAm) along with swelling agent like PEG and pH modifier like citric acid or HCl were selected, and polyester was treated using a combination of exhaust and padding, followed by drying and curing and subsequent fixation using UV light.

### Leaching: to be able to show physical mode of action it is needed to have none or less than MIC values leaching

### Duran bottle leaching studies

The treated and untreated fabrics were used for leaching studies. The sample was rinsed in a Duran bottle with water until the conductivity and the pH value in the rinsing water were constant and close to the used DI (deionised) water. This method is practical for up to about 100 g of dry fabric. The dry treated fabric was weighed (1gr) and put into an Erlenmeyer flask with baffles. 20 ml Of DI water was added to the flask and shake in the rotary water bath at room temperature for 30 min (set the speed so that water and fabric are vigorously shaken) and after every step conductivity and pH value was measured. The leachate was collected and sent for further analysis.

### Morapex leaching studies

One gram of the sample was used for these tests and DI at 95 degree was passed through the sample. 20 ml of the DI was passed through the treated samples and controls five times for each step of the leaching. After each step conductivity and pH value of the leachate was measured.

### Leachate Nitrogen content measurements were then conducted

As polyester does not contain any nitrogen, the only component containing nitrogen in polyester treated samples is polyvinyl amine (PVAm) then measuring the nitrogen content in the leachate can be a suitable index to evaluate the amount of leaching. To measure the nitrogen content, the leachate of different cycles of leaching has been sent to an External lab for total Nitrogen measurement.

The analysis was done based on the LC-OCD-OND method. The detail of this method is explained by Huber et al which is a publicly available study.

### 3-2-4- Polyvinyl amine (PVAm) minimum inhibition concentration (MIC) studies

The Minimum Inhibitory Concentration (MIC) is defined as the lowest concentration of an antimicrobial ingredient or agent that is bacteriostatic (prevents the visible growth of bacteria). MICs are used to evaluate the antimicrobial efficacy of various compounds by measuring the effect of decreasing concentrations of antibiotic/antiseptic over a defined period in terms of inhibition of microbial population growth. Various concentrations of the compounds are inoculated with cultured bacteria, and the results are measured using agar dilution or broth dilution (macro or micro) to determine at what level the MIC endpoint is established. Susceptibility testing is typically conducted using organisms that contribute to an infectious process warranting antimicrobial chemotherapy.

In this study the evaluation of the MIC of PVAm in buffer solution is very critical. if the amount of PVAm in the leachate is less than MIC value, then the free molecule of the polymer does not play any role in a total antibacterial efficiency of the samples and then it is safe to conclude all the antibacterial performance are the effect of polymer which is bound to the surface.

### Method using Blocking of the surface charge

In this approach, the positive charge on the surface of the sample was blocked via selected blocking-agents, and antimicrobial properties of the surface were assessed before and after the blocking procedure. It is expected that antibacterial activity of the surface reduces significantly after charge blockage. EDTA, Humic Acid, STTP, and XP2529 are preselected to be studied as the blocking agents.

The charge measurement of blocked and unblocked surfaces is carried out using three different techniques such as UV-Visible spectroscopy by Orange 2 dye adsorption method, AATCC 100 antimicrobial efficacy test method and measurement of streaming potential (or streaming current) of fabric surface using Surpass analyzer.

The results from all three methods have shown to corroborate the blocking and deblocking of cationic charge hypothesis and immobilization of technology on the fabric surface.

### Blocking agent screening (minimum inhibition concentration (MIC) measurements)

Antibacterial tests were done against the blocking agents in various concentrations to assess the antibacterial properties of these materials and determine the minimum inhibition concentration (MIC). MIC is the minimum concentration of the blocking agent, which can show any antibacterial properties. To omit the possibility of blocking agent interfering into the total antibacterial performance of the samples concentration of less than MIC were chosen to run the blocking experiments.

### Surface charge blocking producer

Chemicals and Equipment:
1. Specially prepared liquor treated Polyester fabric swatches.
2. Blocking agent XP2959 (Acrylic acid polymer, Arkema)⁵.
3. Orange dye 2 sodium salt (Aldrich)⁶.
4. Surfactant
5. Sodium carbonate (RL, AR grade).
6. Acetic acid (RL, AR grade)
7. DI water (Empura grade, Merck).
8. Laundromat (Paramount digiwash INx).
9. pH meter (Contech).
10. Conductivity meter (Hanna).

### Surface Charge Blocking

5 gram/L Solution of blocking agent is prepared in a glass beaker using DI water; then, fabric swatches are placed in the clean glass beaker. Once the fabric swatches were placed in a beaker, a blocking agent solution was added. The fabric to liquor ratio was Maintained at 1: 10 (g/g). The exhaust process is done at 25°C for 20 min at 180 rpm shaking in the beaker. After the exhaust process was completed, fabric swatches were removed from the beaker and squeezed to remove excess solution. Then the fabric swatches were dried at room temperature. The blocked treated fabric swatches were preserved in a self-sealing polyethylene bag and labeled for storage.

These samples were used for AATCC 100 Antibacterial efficiency test and surface charge measurements (Surpass Analyzer-zeta potential, Anton Paar GmbH, Graz, Austria).

### pH Modification (adjusting surface protonation level by pH alternation)

A method of adjusting protonation of cationic polymers to change the amount of positive charge and correlate this value with the antibacterial performance, to bring the required and desired effect.

### Surface pH alternation

Polyester treated samples were prepared and then the textile pH was adjusted to pH 6.5 and 8.7. The samples were tested for their antibacterial performance and surface charge. Surface charge was evaluated by two different methods, orange dye and zeta potential measurements.

### Orange dye method

Orange II (Acid Orange 7) has a strong affinity to positive charges. Orange II solutions can be used to indirectly quantify the positive charge of textiles.

### Zeta potential measurements

The treated polyester samples' zeta potential was determined using a Surpass Electrokinetic Analyzer (Anton Paar GmbH, Graz, Austria) using streaming potential.

### Antimicrobial Assays

E. coli was used as model organisms to test the antimicrobial performance of the untreated, Blocked, deblocked, and treated samples @pH 6.5 and 8.7 samples. AATCC 100 -2012 method has been followed to evaluate the efficiency of the samples.

### Results

Treated Fabric minimum inhibition concentration (MIC) studies was evaluated against one gram positive and one-gram native bacteria. The MIC of the PVAm were investigated in different buffers with different ionic strengths to study the effect of buffer nature and ionic strengths on MIC. The MIC Values for Liquor in different buffers with various pH values are presented in table 1.

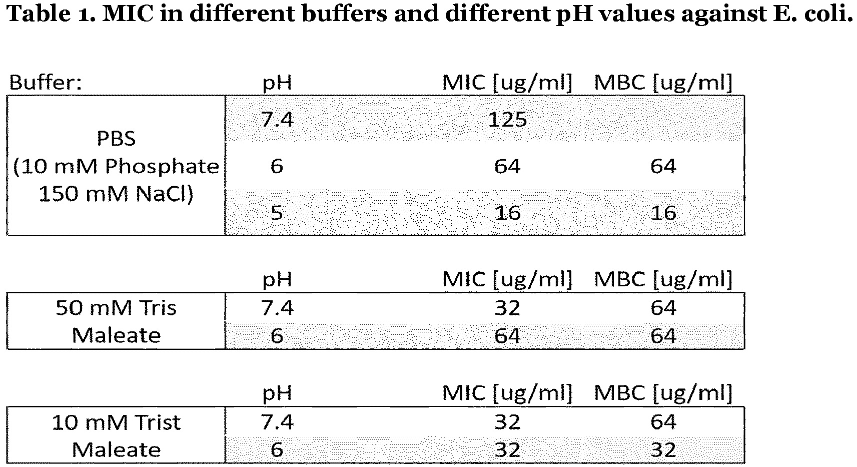

Also in the following graphs, the growth curves of the E. coli and S. Aureus are shown according to different concentres of the Cationic polymer. As it is shown for both microorganisms in PBS, at pH 7.4, the MIC value is 64µg/L (64v ppm).

These experiments were also done in an external lab and obtained results matching with internal studies. As it is demonstrated in the results the pH of the buffer and ionic strength of the buffer shows a clear effect on the antibacterial properties of the liquor.

### Leaching studies

The treated samples were considered as a binary system of polyester and cationic polymer. It was assumed that polyester (commercial source) does not contain any nitrogen, meaning the sole source of nitrogen in the leachate would be PVAm. Based on this assumption, the leachate samples were tested for their total nitrogen content.

The total nitrogen content of the leachate samples for Duran bottle methods is demonstrated in the following table.

**Table 2- Total organic carbon and total nitrogen values of the leachate samples in different cycles of leaching**

| | **Total Organic Carbon (TOC, ppb)** | | | | | **Total Nitrogen (TN, ppb)** | | | | |
|---|---|---|---|---|---|---|---|---|---|---|
| **samples** | **Cycle 1** | **Cycl e 2** | **Cycl e 3** | **Cycle 4** | **Cycle 5** | **Cyc le 1** | **Cyc le 2** | **Cyc le 3** | **Cyc le 4** | **Cyc le 5** |
| **Untreated polyester** | 5294 | 667 | 287 | 308 | 452 | 130 | 36 | 15 | 118 | 24 |
| **Treated polyester(20g/L)** | 14325 | 842 | 248 | 254 | 265 | 111 | 20 | <5 | <5 | <5 |
| **Treated polyester(75g /L)- washed in production** | 4575 | 2343 | 1615 | 1435 | 1013 | 143 | 51 | 71 | 98 | 62 |

As demonstrated in Table 2, contrary to our assumptions, the control polyester also showed considerable nitrogen leaching, confirming the presence of nitrogen-containing molecules in our control sample. As the chemical nature and portion of this molecule in the leachate are unknown, probably from the dyestuffs used, it is challenging to evaluate the exact amount of PVAm in the leachate of treated samples. So, although it is possible that partially the nitrogen content in the leachate of the treated samples came from the original material present on the surface, the worst-case scenario was considered, and calculations were done considering all the nitrogen in the leachate of treated samples originates from the treatment given to the textile.

Presuming all the TN belongs to liquor, to convert the nitrogen amount to a concentration of liquor, the TN results were multiplied by 3.07.

The molecular mass of the basic unit of the liquor is 43 g/mol. It contains 1 N, which is 14 g/mol. This results in the factor 43/14 = 3.07.

**Table 3: Concentration in the leachate of the treated samples with different amounts of liquor**

| | **Active material concentration (ppb)** | | | | |
|---|---|---|---|---|---|
| **samples** | **Cycle 1** | **Cycle 2** | **Cycle 3** | **Cycle 4** | **Cycle 5** |
| **Untreated polyester** | N/A | N/A | N/A | N/A | N/A |
| **Treated polyester(20g/L)** | 333 | 60 | < 15 | < 15 | < 15 |
| **Treated polyester(75g/L)** | 429 | 153 | 213 | 294 | 186 |

The leaching experiments also were done by Morapex at 95 degree and leachate was analyzed for its nitrogen content. Following tables present the data of the leaching for these samples.

**Table 4 A and B - Total organic carbon and total nitrogen values of the leachate samples in different cycles of leaching calculated the concentration of the actives in the leachate of the treated samples.**

| **A** | **Total Organic Carbon (TOC)** | | | | | **Total Nitrogen (TN)** | | | | |
|---|---|---|---|---|---|---|---|---|---|---|
| **samples** | **Cycl e 1** | **Cycl e 2** | **Cycl e 3** | **Cycl e 4** | **Cycl e 5** | **Cycl e 1** | **Cycl e 2** | **Cycl e 3** | **Cycl e 4** | **Cycl e 5** |
| **Untreat ed polyest er** | 3230 | 784 | 791 | 700 | 729 | 339 | 36 | 34 | 29 | 31 |
| **Treated polyest er(20g/ L)** | 1110 8 | 597 | 491 | 511 | 611 | 358 | 74 | 71 | 31 | 41 |

| **B** | | Actives concentration | | | | | | | | |
|---|---|---|---|---|---|---|---|---|---|---|
| **samples** | | **Cycle 1** | **Cycl e 2** | **Cycl e 3** | **Cy cl e 4** | **Cycle 5** | | | | |
| **Untreated polyester** | | N/A | N/A | N/A | N/ A | N/A | | | | |
| **Treated polyester(20g/ L)** | | 1074 | 222 | 213 | 93 | 123 | | | | |

It is observed that the number of Actives leached from the samples after the 1st washing cycle reduces significantly, a step that is mandatory in textile processing, and in all the cycles, the amounts of the actives are less than the MIC value of the active.

### Surface charge blocking

To block the surface charge, a blocking agent was needed. 5 different types of blocking agents were chosen, and their MIC were evaluated. The main reason to evaluate the MIC of the blocking agent was to define a concentration range in which, while surface charges are blocked, the blocking agent itself does not show any antibacterial performance.

After evaluating the MIC of the blocking agents mentioned in material and methods of this study, the concentration range was defined, and surface charges were blocked and measured with two different methods. At the same time samples were sent for antibacterial assay against E. coli and their antibacterial performance was tested.

It was observed XP25 does not show any antibacterial properties at the 5 g/L concentration and at this concentration, based on the measurements, it could block the surface charge successfully. Table 5 demonstrates the measured surface charge and correspondent antibacterial properties. Each test was repeated three times and the reported values are the average.

**Table 5- Average surface charge and antibacterial activity of the samples before and after surface charge blocking**

| | **Samples Log reduction (1 hr)** | **Zeta potential mV** | **Samples Log reduction (24hr)** |
|---|---|---|---|
| Untreated Polyester | 0.12 | -44 | 0.02 |
| Treated polyester | 5.6 | +18 | 3.49 |
| Treated polyester -blocked | 0.18 | -40 | 0.3 |

### Effect of Surface Charge alternation

Polyester was treated with liquor. After leaching with deionized water, the sample pH adjusted to different pH values and their antibacterial performance was tested against E. coli based on ATTC 100-2012. Table 6 demonstrated the antibacterial properties, surface charge.

**Table 6- correlation between surface charge at different pH of the surface and antibacterial activity**

| | **Samples Log reduction (1hr)** | **Zeta potential mV** |
|---|---|---|
| Untreated (control) | 0.02 | -44 |
| Standard treated (treated sample at pH: 6.5) | 4.8 | +20 |
| Standard treated sample (treated sample at pH 8.7) | 2.7 | +4 |

To be able to show the antibacterial properties of treated polyester solely comes from the surface charge, we should be able to demonstrate the treated fabrics do not leach to the aqueous microenvironment of the antibacterial testing and if even it leaches, the amount of this leaching is less than the MIC of the Liquor. In this case, it can be concluded the free polymer present in the aqueous environment does not show any antibacterial performance and consequently, all the antibacterial properties come from the bound polymer on the surface, and final antibacterial properties, is only due to the accumulation of the surface charge.

As it is demonstrated in Table 2 and Table 3 B, the amount of the actives leached in each cycle of the leaching is in ppb levels and significantly less than the MIC Value of the PVAm in PBS buffer which is presented previously in this study.

These results confirmed the hypothesis that the antibacterial properties of the treated polyester fabric are only the effect of bounded polymer on the surface and free polycationic molecules do not play any role in this antibacterial performance, therefore any antibacterial mechanism of action related to polycationic polymers in a solution form can be confidently excluded.

The surface charge of the polyester and treated polyester was measured with streaming potential measurements to calculate the zeta potential at pH 6.5. Due to the modifications of the liquor, it is pH sensitive and its protonation level and consequently its charge will change by varying the ph. So, all the measurements for this set of experiments were done at pH 6.5 which is the pH of the buffer used for antibacterial testing. 0.001M KCL has been used as a measurement buffer and NaOH/HCl as titration solutions.

Subsequently, the treated sample was blocked with a blocking agent as it was explained previously and analyzed for its surface charge and antibacterial properties. Table 4 shows the zeta potential value of these samples compared to the control. Each measurement has been repeated three times.

As it is shown in table 4, the implementation of formulation on polyester results in higher zeta potential due to the presence of the positively charged amino groups. After the blocking process, it is demonstrated, the zeta potential of the blocked textile is comparable with untreated polyester, which indicates, all the positive charges presented on the surface were blocked via using a blocking agent.

Treated samples and blocked samples were tested for their antibacterial performance and it was observed the sample lost its antibacterial activity completely after losing its surface charge. Polycationic polymers with amino groups have pH-protonation-dependent characteristics. As the pH decreases, the amino groups in the structure of these polymers become protonated, and consequently, the surface charge will change.

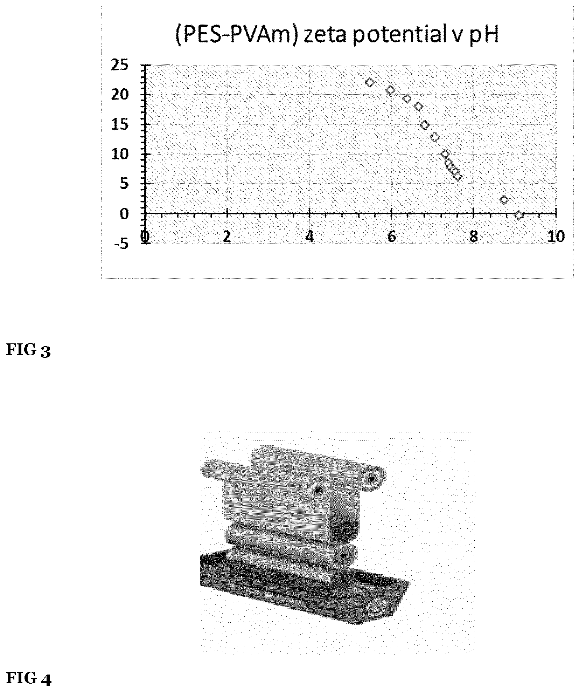

Although, as it is shown the graph below, the polymer is partially protonated over most of the pH scale, its ionization behavior cannot be described by a pKa value, still when the zeta potential of the polyester treated sample was measured at different pH values the, it was observed by changing the pH value of the surface, the zeta potential of the surface changes significantly. As it is demonstrated in Figure 3, polyester treated fabric has different surface charge over a range of pH. We have used this characteristic of our samples to further confirm the hypothesis of correlation between surface charge and antibacterial activity.

As shown at acidic pH (6.5), as expected, the textile sample carries a more positive charge on the surface than alkaline pH (8.7). These samples have been tested for antibacterial efficiency, and as it is shown in the table (Table 5). It is observed that a standard treated sample with a pH of 6.5 shows 4.8 and 2.7 log reduction after 1hr., respectively. These results elegantly show the effect of surface charge on the antibacterial performance of these surfaces and it is also in very good agreement with published literature. As the formulation and the concentration of the polycationic polymer on the surface of polyester textile are the same and only the protonation states (surface charge) are different, it can be concluded that the antibacterial activity of the surface directly is correlated to the surface charge.

Furthermore, all treated substrates were subject to various detergents or Anionic charges that would have blocked the surfaces, however due to the presence of Zwitterionic substances and/or Hydrophobic substances the effect of reduction of the charge was eliminated.

## Claims

1. A mixture comprising:
- a cationic agent;
- a carrier substance which can be fixed to a substrate surface by a step of coating followed by a step of curing, and to which the cationic agent can be bound in the step of curing.

2. The mixture of the preceding claim, wherein the cationic agent is a cationic monomer or polymer.

3. The mixture of the preceding claim, wherein the cationic monomer is selected from the group comprising 2-trimethylammonium ethyl methacrylate chloride (METAC), acryloxyethyltrimethyl ammonium chloride, dimethylaminoethyl acrylate, methacryloxyethyltrimethyl ammonium chloride, and diallyldimethylammonium chloride.

4. The mixture of any one of any one the preceding claims, wherein the cationic agent as such, when not fixed to the substrate, is not antimicrobial.

5. The mixture of any one of the preceding claims, wherein the mixture when fixed to the substrate surface can impart to said substrate a net positive charge of at least 10mV ζ-potential, preferably at least 20mV ζ-potential, more preferably at least 30mV ζ-potential, even more preferably at least 40mV ζ-potential, particularly at least 50mV ζ-potential, and most preferably at least 60mV ζ-potential.

6. The mixture of any one of the preceding claims, wherein the substrate is a textile such as a woven or non-woven textile, glass, metal, stone, ceramics, wood, paper, and/or a polymeric substrate such as plastic PVC, TPU, rubber, or nitrile latex.

7. The mixture of any one of the preceding claims, wherein the carrier substance is selected from the group comprising polyurethane, epoxy resin, and acrylics.

8. The mixture of the preceding claim, wherein the polyurethane is water-based or solvent-based.

9. The mixture of any one of the preceding claims, wherein the carrier substance is selected from the group comprising varnishers, lacquers, inks, and paints.

10. The mixture of any one of the preceding claims, wherein the mixture comprises a UV-photoinitiator or a thermal initiator and the curing is UV-curing or thermal curing,
optionally, wherein the UV-photoinitiator and/or the thermal initiator is/are a solvent-based photoinitiator or a water-soluble photoinitiator,
optionally, wherein the UV-photoinitiator and/or the thermal initiator is/are selected from the group comprising Lithium phenyl-2,4,6-trimethylbenzoylphosphinate, 2,2'-Azobis (2-methylpropionamidine) dihydrochloride, 2-Hydroxy-4'-(2-hydroxyethoxy)-2-methylpropiophenone, 4,4'-Azobis(4-cyanovaleric acid), 2-Benzyl-2-(dimethylamino)-4'-morpholino butyrophenone, 4,4'-Bis(diethylamino)benzophenone, phenylic(2,4,6-trimethylbenzoyl)phosphine oxide (TPO), Benzophenone Cerium (IV) ammonium nitrate, Ammonium persulfate.

11. A method of fixing the mixture of any one of the preceding claims to a substrate surface, comprising the steps of
- coating the substrate surface with the mixture;
- curing of the coating.

12. The method of claim 11, wherein the cationic agent is bound to the carrier substance in the step of curing,
optionally, wherein the cationic agent is bound to the carrier substance by crosslinking or polymerization.

13. A substrate having a surface to which a mixture of any one of claims 1 to 10 has been applied, preferably by the method of any one of claims 11 or 12.

14. The substrate of claim 13, wherein the substrate is a textile, in particular a woven or non-woven textile, glass, metal, stone, ceramics, wood, paper, and/or a polymeric substrate such as plastic PVC, TPU, rubber, or nitrile latex.

15. The substrate of any one of claims 13 or 14, wherein the substrate is part of a medical device, a flooring, home furnishing, wall, food packaging, sanitary facility, in particular toilet or toilet seat.
